# EUROPEAN PATENT SPECIFICATION

(11) **EP 4 392 370 B1**
(45) Date of publication and mention of the grant of the patent: **01.10.2025**
(21) Application number: 22768825.6
(22) Date of filing: 25.08.2022
(51) Int. Cl.: C01B 21/26, B01D 53/56, C01B 21/28, C01B 21/38, F01K 23/06, F01K 27/02

(54) **MONO PRESSURE SYSTEM FOR PRODUCING NITRIC ACID AND METHOD OF OPERATING THEREOF**
MONO-DRUCKSYSTEM ZUR HERSTELLUNG VON SALPETERSÄURE UND VERFAHREN ZU DESSEN BETRIEB
SYSTÈME MONOPRESSION POUR LA PRODUCTION D'ACIDE NITRIQUE ET SON PROCÉDÉ DE FONCTIONNEMENT

(30) Priority: 25.08.2021 EP 21193034
(43) Date of publication of application: 03.07.2024
(73) Proprietor: Yara International ASA, 0277 Oslo (NO)
(72) Inventor: VIGELAND, Bent, 3714 Skien (NO); ØIEN, Halvor, 3943 Porsgrunn (NO); BANASIAK, Krzysztof, 7018 Trondheim (NO); DE SMET, Andre, 4535 JH Terneuzen (NL); FAUCONNIER, Peter, 1850 Grimbergen (BE)
(74) Representative: De Clercq & Partners
(86) International application number: PCT/EP2022/073641
(87) International publication number: WO 2023/025871

(56) References cited:
- EP-A2- 0 945 400
- CN-A- 102 838 096
- US-A- 4 869 890
- US-B2- 7 258 849

## Description

### Field

The present disclosure relates to the field of nitric acid production in a mono pressure plant.

### Introduction

Pure nitric acid is a clear, colorless liquid with a strong odor. Nitric acid is produced in large quantities principally by catalytic oxidation of ammonia (Ostwald process). Ammonia is converted to nitric acid in two stages. The ammonia is first oxidized in an ammonia burner on platinum gauzes (commonly called ammonia converter), producing nitric oxide (in this disclosure also called nitrogen monoxide (NO)) and water:

4 NH₃ (g) + 5 O₂ (g) → 4 NO (g) + 6 H₂O (g) (1)

The reaction product from (1), nitric oxide, following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) → N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOx gases, and finally by heating the tail gas released at the outlet of the absorption tower in which the NOx gases are absorbed.

By absorption in water, nitrogen dioxide and dinitrogen tetroxide are converted to nitric acid and nitric oxide:

3 NO₂ (g) + H₂O (I) → 2 HNO₃(aq) + NO(g) (4)

3 N₂O₄ (g) + 2 H₂O (I) → 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOx gases into water) and a bleacher unit (removal of unreacted dissolved gases, containing in particular NOx and gases, from the aqueous nitric acid solution, which give it its typical brownish color).

The process for the production of nitric acid can be differentiated into a mono-pressure (single-pressure) and dual pressure (split-pressure) process.

In a mono-pressure process, the converter and the absorber unit operate at roughly the same working pressure. Such mono-pressure process generally includes low-pressure processes, LP, from 2 to 6 bar; and high pressure processes, HP, from 6 to 16 bar, in particular from 9 to 16 bar.

The drive power for the air compressor typically originates from a tail-gas turbine and a steam turbine or electric motor. Accordingly, the compressor train of a mono-pressure nitric acid production plant typically comprises an air compressor, a tail-gas turbine, and a steam turbine or electric motor.

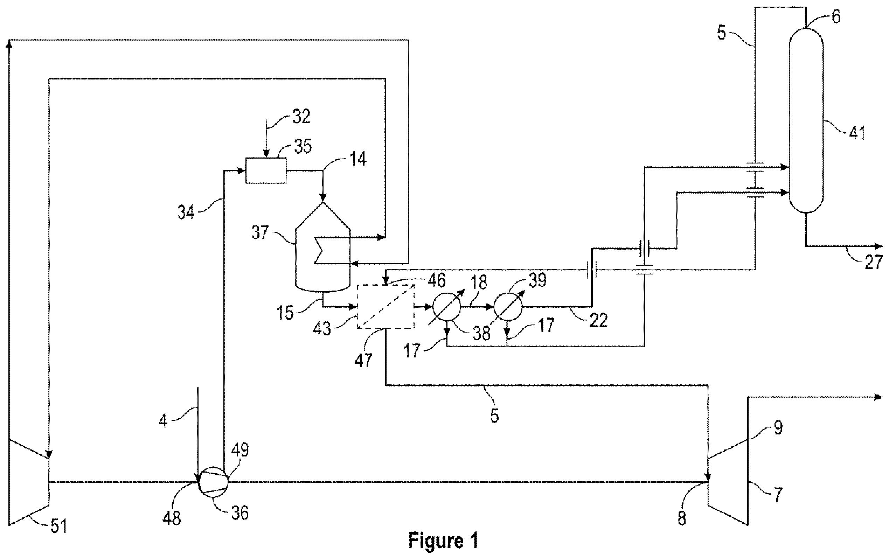

More in detail, referring to Figure 1, a mono-pressure plant and process according to the prior art works as follows. Gaseous ammonia **32,** optionally pre-heated in a pre-heater unit (not shown) is mixed with compressed air **34** pressurised using an air compressor **36,** in a mixing apparatus **35,** and the resulting ammonia/oxygen-enriched air mixture **14** is fed to an ammonia converter **37,** where ammonia is oxidized over a suitable catalyst, thus obtaining a NOₓ gas/steam mixture **15,** comprising water and nitric oxide (NO). The heat of the mixture coming out of the ammonia converter is recovered, after which the NOₓ gas/stream mixture is subsequently cooled down in a water cooler/condenser **38** to a temperature where the water condenses, and an aqueous diluted nitric acid mixture **17** is separated from a gaseous NOₓ stream **22.** The gaseous NOₓ stream is further oxidized to further convert the NO to NO₂ and N₂O₄, and optionally cooled down again in a cooler/separator **39** to separate out another aqueous diluted nitric acid mixture **17** which is directed to an absorption tower **41,** commonly called absorption tower. On the other end, the gaseous NOₓ stream **22** is sent to the absorber unit **41** too. Inside the absorber unit **41,** the NOₓ gas reacts with water to produce the tail gas **5** and a stream of raw nitric acid **27** also containing residual NOₓ gas, which is fed to a bleacher (not shown). The residual NOₓ gas in the raw nitric acid stream **27** is then stripped out with a gaseous medium (not shown) such as an oxygen-containing gas or air, inside the bleacher unit (not shown); the bleacher unit is generally operated at about the same pressure as the ammonia converter. The drive power for both the air compressor **36** originates from a tail gas expander **7** and a steam turbine **51** or electric motor (not shown). The heat generated in the ammonia converter **37** or from the gaseous NOx stream **15** can be used for producing steam for a steam turbine **51.** The optionally heated tail gas **5** is expanded in the tail gas expander **7.**

The air used for the oxidation of ammonia is commonly denoted as primary air; the air used as stripping medium in the bleacher unit is commonly denoted as secondary air.

According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. This revamping has significant drawbacks. First of all, it entails elevated costs for the modification or replacement of the existing equipment, i.e. the air compressor and the corresponding turbines and electrical motor. In addition, the revamping of the equipment is also technically demanding, leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction of power required to operate the air compressor in a mono nitric acid plant.

### Background Prior Art

In CN110540178A (China Chengda Engineering Co Ltd, 2019), a process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than 100mg/Nm³; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of N₂O decomposition catalyst in the oxidation reactor to reduce the content of N₂O to 50-100 PPM through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first HP bleacher unit and a second LP bleacher unit, the first HP bleacher unit stripping with air the NOₓ gas from the output stream of the absorber unit, thus providing a partially stripped nitric acid stream and a nitrogen oxides-loaded air stream, the former being fed to the second LP-bleacher unit and the latter being recycled to the oxidation section, upstream of the NOₓ gas compressor. A further air compressor is also provided, which supplies the first HP bleacher unit with air. Hence, energy is required in order to operate a first HP bleacher unit at a high pressure and then recycle NOₓ gases to the delivery side of the NOₓ gas compressor.

Therefore, there remains a need for a process and a corresponding plant setup for minimizing the amount of energy required in order to operate the air compressor, in order to avoid bottle-necks in the nitric acid production throughput associated with those compressors. Further systems and methods for producing nitric acid are known from US4869890A, US7258849B, CN102838096A and EP0945400A.

### Summary

In one aspect of the disclosure, a system for producing nitric acid at reduced power consumption is disclosed. The system comprises:
- an air compressor for compressing air to a pressure P1, comprising an inlet and an outlet, to provide in a compressed air stream;
- a source of pressurised oxygen-rich gas having a pressure higher than P1, such as a high pressure water electrolyzer, in fluid communication with the compressed air stream, to provide in an oxygen-rich gas/compressed air stream mixture;
- a mixing apparatus for mixing the oxygen-rich gas/compressed air stream mixture with an ammonia gas stream, optionally pre-heated in a pre-heater, to provide in an ammonia/oxygen-enriched air mixture;
- an ammonia converter for oxidising ammonia in the ammonia/oxygen-enriched air mixture, to provide in a NOₓ gas/steam mixture, comprising water and nitric oxide;
- means for measuring the temperature in the ammonia converter;
- means for regulating the concentration of ammonia and of oxygen in the ammonia converter;
- a steam turbine or an electric motor and means for converting steam into electricity, for converting steam into power, in fluid communication with the ammonia converter or the NOₓ/gas steam mixture;
- a water cooler/condenser for separating and condensing steam from NOₓ gas in the gaseous NOₓ gas/steam mixture, thereby generating an aqueous diluted nitric acid mixture and a gaseous NOₓ stream;
- an absorption tower downstream the water cooler/condenser, for absorbing the NOₓ gases from the gaseous NOₓ stream in water, to provide in a stream of raw nitric acid-containing residual NOₓ gas and a tail gas comprising NOₓ gases, comprising an absorption tower tail gas outlet for evacuating the tail gas; and
- a tail gas expander for expanding the tail gas downstream of the absorption tower comprising a tail gas expander inlet in fluid communication with the absorption tower tail gas outlet, and a tail gas expander outlet.

The system is further characterised in that it further comprises:
- means for splitting the tail gas into a first tail gas stream directed to the tail gas expander inlet and a second tail gas stream directed to a means for pressurizing, for pressurizing the tail gas stream to a pressure of about P1 in fluid communication with the compressed air stream, to provide in a pressurised tail gas stream joining the compressed air stream; and
- means for adjusting the amount of tail gas being splitted into the first tail gas stream directed to the tail gas expander inlet and the second tail gas stream directed to the means for pressurising.

The inventors have realised that upon recirculating part of the tail gas to the compressed air stream at a pressure about the pressure P1 of the compressed air stream, downstream the air compressor and upstream the ammonia converter, while at the same time feeding pressurised oxygen to the compressed air stream, and maintaining the temperature in the ammonia converter in the range of 800 to 950 °C and the oxygen to ammonia molar ratio in the ammonia converter between 1.3 and 9, the net power consumption by the compressor train is reduced, considering the reduced power production from the tail gas expander, the compression of the tail gas to P1 and the reduction in power required by the air compressor. Therefore, with the system of the disclosure, power reduction is achieved at the same time as the size of the air compressor and the size of the tail gas expander are reduced, resulting in the reduction of the area footprint of the plant and simplification of the system. Also, the separate supply of the pressurized oxygen or oxygen-rich gas ensures an optimal conversion of ammonia to nitric oxide.

In one embodiment according to the system of the disclosure, the system further comprises a tail gas heater, having an inlet in fluid communication with the absorption tail gas outlet and an outlet in fluid communication with the tail gas expander inlet, positioned upstream from the water cooler/condenser for heating the tail gas coming from the absorption tower to a temperature ranging between 200 to 650 °C with the heat from the NOₓ gas/steam mixture coming from the ammonia converter, and wherein means for splitting the tail gas is positioned upstream from the tail gas heater.

In one embodiment according to the system of the disclosure, the system further comprises a tail gas heater, having an inlet in fluid communication with the absorption tail gas outlet and an outlet in fluid communication with the tail gas expander inlet, positioned upstream from the water cooler/condenser for heating the tail gas coming from the absorption tower to a temperature ranging between 200 to 650 °C with the heat from the NOₓ gas/steam mixture coming from the ammonia converter, and wherein means for splitting the tail gas is positioned downstream from the tail gas heater.

In one embodiment according to the system of the disclosure, the source of pressurised oxygen-rich gas is supplied by a high pressure water electrolyser.

In one embodiment according to the system of the disclosure, the system further comprises a source of oxygen-rich gas having a pressure at least equal to atmospheric pressure, in fluid communication with the inlet of the air compressor.

In one embodiment according to the system of the disclosure, the system further comprises an additional source of pressurised oxygen-rich gas in fluid communication with an area downstream the absorption tower and upstream the means for pressurising.

In one embodiment according to the system of the disclosure, the system further comprises a bleacher for bleaching raw nitric acid-containing residual NOₓ gas, comprising an inlet for an oxygen-rich bleaching gas, an inlet for the nitric acid, an outlet for bleached nitric acid and an outlet for bleaching gases, wherein the outlet for the bleaching gases is in fluid communication with the gaseous NOₓ stream.

In another aspect of the disclosure, a method for producing nitric acid at reduced power consumption is disclosed. The method comprises the steps of:
a) compressing air in an air compressor, thereby producing a compressed air stream having a pressure P1;
b) mixing pressurised oxygen-rich gas having a pressure higher than P1 with the compressed air stream, thereby obtaining an oxygen-rich gas/compressed air stream mixture;
c) mixing the oxygen-rich gas/compressed air stream mixture with an ammonia gas stream in a mixing apparatus, thereby producing an ammonia/oxygen-enriched air mixture, such as to achieve an oxygen to ammonia molar ratio ranging from 1.3 to 9;
d) oxidising ammonia in the ammonia/oxygen-enriched air mixture in an ammonia converter at a temperature ranging from 800 to 950 °C, thereby producing a gaseous NOₓ gas/steam mixture, comprising water and nitric oxide;
e) converting the steam generated in the ammonia converter or from the gaseous NOₓ gas/steam mixture into power;
f) separating and condensing steam from NOₓ gas in the gaseous NOₓ gas/steam mixture, thereby generating an aqueous diluted nitric acid mixture and a gaseous NOₓ stream, in a water cooler/condenser;
g) absorbing the gaseous NOₓ stream in an absorption tower, thereby producing a stream of raw nitric acid-containing residual NOₓ gas and a tail gas comprising NOₓ gases; and
h) expanding the tail gas in a tail gas expander;

The method is characterised in that it further comprises the steps of:
i) pressurising part of the tail gas 5 obtained from step g) to a pressure of about P1, thereby generating a pressurised tail gas;
j) mixing the pressurised tail gas with the compressed air stream;
k) measuring the temperature in the ammonia converter; and
l) adjusting the amount of the total gas volume being pressurised in step i) if the temperature measured in step k) is outside the range of 800-950 °C, such that the temperature in the ammonia converter is maintained in the range of 800 and 950 °C.

In one embodiment according to the method the method further comprises the step of:
m) heating the tail gas obtained in step g) to a temperature ranging from 200 to 650 °C in a tail gas heater positioned upstream from the water cooler/condenser with the heat from the NOₓ gas/steam mixture coming from the ammonia converter.

In one embodiment according to the method of the disclosure, the method further comprises the step of:
m') heating the tail gas obtained in step g) to a temperature ranging from 200 to 650 °C in a tail gas heater positioned upstream from the water cooler/condenser with the
heat from the NOₓ gas/steam mixture coming from the ammonia converter; wherein, in step i), part of the tail gas obtained in step g) or in step m') is pressurised.

In one embodiment according to the method of the disclosure, the method further comprises the step of:
n) operating a high pressure water electrolyser in order to produce the oxygen gas or oxygen-rich gas used in the mixing step b).

In one embodiment according to the method of the disclosure, the method further comprises the step of:
o) sending an oxygen-rich gas having a pressure at least equal to atmospheric pressure to the inlet of the air compressor.

In one embodiment according to the method of the disclosure, the method further comprises the step of:
p) feeding an additional source of pressurised oxygen-rich gas downstream the absorption tower and upstream the means for compressing.

In one embodiment according to the method of the disclosure, the method further comprises the steps of q) feeding an oxygen-rich bleaching gas to a bleacher for bleaching raw nitric acid-containing residual NOₓ gas; r) bleaching the nitric acid in the bleacher, thereby generating bleached nitric acid and bleaching gases; and s) mixing the bleaching gases with the gaseous NOₓ stream.

In another aspect of the disclosure, the use of the system the disclosure for performing the method of the disclosure is disclosed.

In another aspect of the disclosure, a method for revamping a system or production plant for producing nitric acid is disclosed, wherein the existing system or production plant comprises
- an air compressor for compressing air to a pressure P1, comprising an inlet and an outlet, to provide in a compressed air stream;
- optionally, a source of pressurised oxygen-rich gas having a pressure higher than the pressure of the compressed air stream, in fluid communication with the compressed air stream, to provide in an oxygen-rich gas/compressed air stream mixture;
- a mixing apparatus for mixing the oxygen-rich gas/compressed air stream mixture with an ammonia gas stream, optionally pre-heated in a pre-heater, to provide in an ammonia/oxygen-enriched air mixture;
- an ammonia converter for oxidising ammonia in the ammonia/oxygen-enriched air mixture, to provide in a NOₓ gas/steam mixture, comprising water and nitric oxide; means for measuring the temperature in the ammonia converter;
- means for regulating the concentration of ammonia and of oxygen in the ammonia converter;
- a steam turbine or an electric motor and means for converting steam into electricity, for converting steam into power, in fluid communication with the ammonia converter or the NOₓ/gas steam mixture;
- a water cooler/condenser, for separating and condensing steam from NOₓ gas in the gaseous NOₓ gas/steam mixture, thereby generating an aqueous diluted nitric acid mixture and a gaseous NOₓ stream;
- an absorption tower downstream the water cooler/condenser, to provide in a stream of raw nitric acid-containing residual NOₓ gas and a tail gas comprising NOₓ gases, comprising an absorption tower tail gas outlet for evacuating the tail gas; and
- a tail gas expander for expanding the tail gas downstream of the absorption tower comprising a tail gas expander inlet in fluid communication with the absorption tower tail gas outlet, and a tail gas expander outlet;
into a system according to the disclosure is disclosed.

The method comprises the steps of:
- introducing means for splitting the tail gas into a first tail gas stream directed to the tail gas expander inlet and a second tail gas stream directed to means for pressurising for pressurising the second tail gas stream to a pressure of about P1 in fluid communication with the compressed air stream, to provide in a pressurised tail gas stream joining the compressed air stream; and introducing means for adjusting the amount of tail gas being splitted into the first tail gas stream directed to the tail gas expander inlet and a second tail gas stream directed to means for pressurising.

### List of Figures

**Figure 1** schematically shows a mono pressure nitric acid plant according to the prior art.
**Figure 2A** schematically shows an embodiment of a mono-pressure nitric acid plant according to the present disclosure.
**Figure 2B** schematically shows an embodiment of a mono-pressure nitric acid plant according to the present disclosure.
**Figure 3** schematically shows an embodiment of the mono-pressure nitric acid plant according to the present disclosure.
**Figure 4** schematically shows an embodiment of the mono-pressure nitric acid plant according to the present disclosure.

### List of numerals

| | |
|---|---|
| **4** | Air |
| **5** | tail gas directed to the tail gas expander inlet **8** |
| **6** | outlet of nitric acid absorption tower |
| **7** | tail gas expander |
| **8** | inlet of tail gas expander |
| **9** | outlet of tail gas expander |
| **10** | tail gas stream directed to means for pressurising **53** |
| **14** | ammonia/oxygen-enriched air mixture |
| **15** | NOₓ gas/steam mixture |
| **17** | aqueous diluted nitric acid mixture |
| **18** | gaseous NOₓ stream |
| **22** | gaseous NOₓ stream |
| **27** | stream of raw nitric acid-containing residual NOₓ gas |
| **32** | ammonia |
| **34** | compressed air |
| **35** | mixing apparatus |
| **36** | air compressor |
| **37** | ammonia converter |
| **38** | water cooler/condenser |
| **39** | cooler/separator |
| **41** | absorption tower |
| **43** | tail gas heater |
| **46** | tail gas heater inlet |
| **47** | tail gas heater outlet |
| **48** | air compressor inlet |
| **49** | air compressor outlet |
| **50** | pressurised oxygen-rich gas stream |
| **51** | steam turbine |
| **52** | pressurised tail gas |
| **53** | means for pressurising the tail gas stream directed to means for pressurising **53** |
| **54** | source of oxygen-rich gas having a pressure at least equal to atmospheric pressure |
| **55** | means for splitting the tail gas |
| **56** | oxygen-rich gas/compressed air stream mixture |
| **57** | Bleacher |
| **58** | bleacher inlet for bleaching gas |
| **59** | bleacher outlet for bleached nitric acid |
| **60** | oxygen-rich gas stream |
| **61** | bleaching gases |
| **63** | bleached nitric acid |
| **64** | bleacher inlet for nitric acid |
| **65** | bleacher outlet for bleaching gases |
| **66** | pressurised water electrolyser |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "in the ranges of" and "ranging from ... to ..." as used when referring to a range for a measurable value, such as a parameter, an amount, a time period, and the like, is intended to include the limits associated to the range that is disclosed.

As defined herein, a pressurised oxygen-rich gas is a gas having a pressure ranging from 9 to 30 bar, preferably 15 to 30 bar, and comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen.

As defined herein, an oxygen-rich gas is a gas comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen.

As defined herein, air is ambient air, having a pressure about the atmospheric pressure.

### System for producing nitric acid

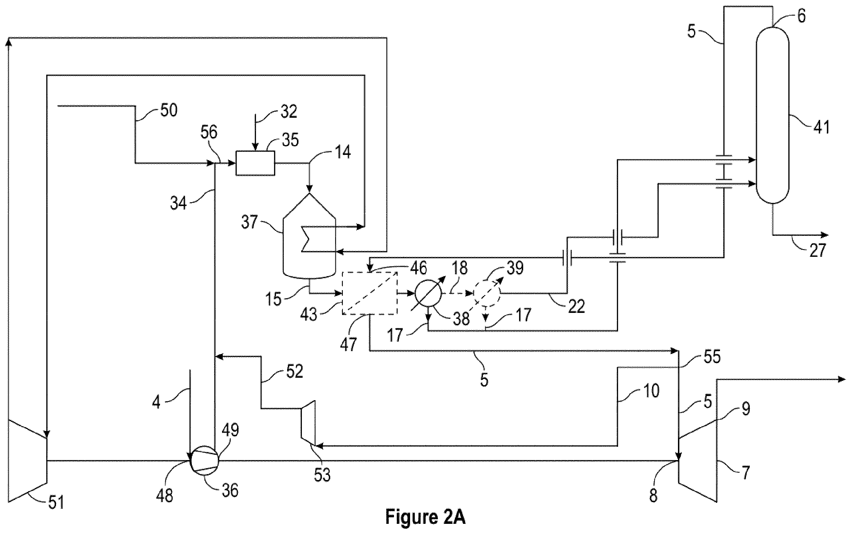

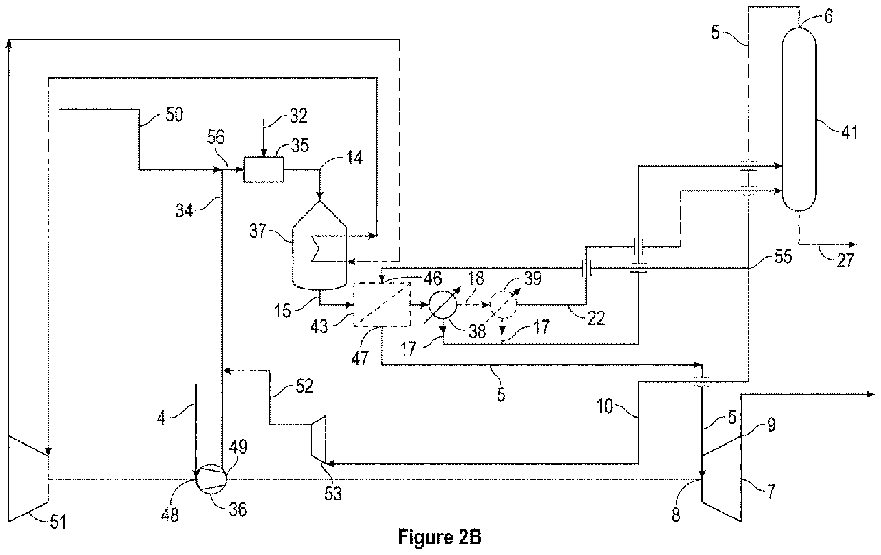

Reference is made to Figures 2A and 2B. In one aspect of the disclosure, a system for producing nitric acid at reduced power consumption is disclosed. The system comprises an air compressor **36** for compressing air to a pressure P1, comprising an inlet **48** and an outlet **49,** to provide in a compressed air stream **34;** a source of pressurised oxygen-rich gas **50** having a pressure higher than the pressure P1, in fluid communication with the compressed air stream **34,** to provide in an oxygen-rich gas/compressed air stream mixture **56;** a mixing apparatus **35** for mixing the oxygen-rich gas/compressed air stream mixture **56** with an ammonia gas stream **32,** optionally pre-heated in a pre-heater, to provide in an ammonia/oxygen-enriched air mixture **14;** an ammonia converter **37** for oxidising ammonia in the ammonia/oxygen-enriched air mixture **14,** to provide in a NOₓ gas/steam mixture **15,** comprising water and nitric oxide; means for measuring (not shown) the temperature in the ammonia converter **37;** means for regulating the concentration of ammonia and of oxygen in the ammonia converter **37;** a steam turbine **51** or an electric motor (not shown) and means for converting steam into electricity (not shown), for converting steam into power, in fluid communication with the ammonia converter **37** or the NOₓ/gas steam mixture **15;** an arrangement of a water cooler/condenser **38,** for separating and condensing steam from NOₓ gas in the gaseous NOₓ gas/steam mixture **15,** thereby generating an aqueous diluted nitric acid mixture **17** and a gaseous NOₓ stream **22;** an absorption tower **41** downstream the water cooler/condenser **38,** for absorbing the NOₓ gases from the gaseous NOₓ stream **22** in water, to provide in a stream of raw nitric acid-containing residual NOₓ gas **27** and a tail gas **5** comprising NOₓ gases, comprising an absorption tower tail gas outlet **6** for evacuating the tail gas **5;** and a tail gas expander **7** for expanding the tail gas **5** downstream of the absorption tower comprising a tail gas expander inlet **8** in fluid communication with the absorption tower tail gas outlet **6,** and a tail gas expander outlet **9.**

The system is further characterised in that it further comprises means for splitting **55** the tail gas **5** into a first tail gas stream **5** directed to the tail gas expander inlet **8** and a second tail gas stream **10** directed to means for pressurising **53** for pressurising the tail gas stream **10** to a pressure of about P1 in fluid communication with the compressed air stream **34,** to provide in a pressurised tail gas stream **52** joining the compressed air stream **34;** and means for adjusting the amount of tail gas **5** being splitted into the first tail gas stream **5** directed to the tail gas expander inlet **8** and the second tail gas stream **10** directed to means for pressurising **53.**

As defined herein, means for regulating the concentration of ammonia and oxygen in the ammonia converter **37** are any suitable means for assessing the amount of ammonia to be introduced in the system from a measure of the oxygen concentration, or the amount of oxygen to be introduced in the system from a measure of the ammonia concentration, such that the oxygen to ammonia molar ratio will range from 1.3 to 9. The oxygen or ammonia concentration can be determined, for example, from a measurement in the gas phase using a process gas analyser. The oxygen or ammonia concentration can also be determined from computing using the concentration of the oxygen- or ammonia source being introduced in the system, the flow at which the source is introduced in the system, and the relative flow values of the gases at which the gases are mixed. Using the oxygen or ammonia concentration, the relevant flow of ammonia or oxygen respectively to be introduced in the system is, in turn, determined and is used in controlling the flow of ammonia or oxygen, from gaseous sources of ammonia or oxygen respectively at pre-determined concentrations. Controlling of the flow of gaseous ammonia or oxygen can, for example, be achieved through flow control valves. In particular, the means is an integrated process control system, in which the concentration of oxygen or ammonia respectively is measured, and the relevant flow of ammonia or oxygen respectively is thereby determined, thus controlling the flow of ammonia or oxygen, from gaseous sources of ammonia or oxygen respectively at pre-determined concentrations.

As defined herein, means for measuring the temperature are any means suitable for measuring and indicating the temperature in the ammonia oxidation burner. In particular, the means for measuring the temperature is a thermocouple or a thermometer suitable for measuring and indicating a temperature as high as 1000 °C. More in particular, the means for measuring the temperature is an infrared thermometer for measuring and indicating a temperature as high as 1000 °C.

As defined herein, means for converting steam into power are any mean for achieving power from steam. In particular those means are a steam turbine connected to an electric generator.

As defined herein, means for splitting are any means suitable for splitting the tail gas **5** such as to generate, in addition to the tail gas **5,** another gas stream **10** of tail gas directed to the means for pressurising **53.** In particular, the means for splitting is a T-connection having one inlet and two outlets, such that a gas flowing through the inlet of the T-connection is splitted into two gas streams of identical chemical composition.

As defined herein, means for compressing are any suitable means for increasing the pressure of the tail gas **10** in fluid communication with the compressed air stream **34.** In particular, the means for compressing is a gas compressor or a gas ejector through which a motive gas is flowing at a higher velocity than the tail gas **10** in fluid communication with the compressed air stream **34.**

As defined herein, means for adjusting the amount of tail gas **5** being splitted into the first tail gas stream **5** directed to the tail gas expander inlet **8** and the second tail gas stream **10** directed to the means for pressurising **53,** are any means for controlling the splitting in the means for splitting **55.** In particular, the means for splitting **55** is a T-connection as described above and the means for adjusting is an orifice or a guide vane or a flow control valve at one or both of the outlets of the T-connection. Even more in particular, the means is an integrated process control system, in which the temperature in the ammonia converter **37** is determined through the means for measuring the temperature. The temperature in the ammonia converter **37** is then used for controlling a flow control valve in the means for splitting **55,** thereby controlling the splitting of the tail gas **5,** in order for the measured temperature to be maintained in the range of 800 to 950 °C.

The inventors have realised that upon recirculating part of the tail gas **5** to the compressed air stream **34,** at the pressure P1 of the compressed air stream **34,** downstream the air compressor **36** and upstream the ammonia converter **37,** while at the same time feeding pressurised oxygen **50,** such as provided by a high-pressure electrolyser, to the compressed air stream **34,** and maintaining the temperature in the ammonia converter **37** in the range of 800 to 950 °C and the oxygen to ammonia molar ratio in the ammonia converter **37** between 1.3 and 9, net reduction of the power consumption by the compressor train can be achieved. Albeit the tail gas **5** leaving the absorption tower **41** is less pressurised than the compressed air stream **34** leaving the air compressor **36,** the corresponding pressure drop only accounts for 0.5 to 1.5 bar. Consequently, the tail gas **5,** whether upstream or downstream the tail gas heater **43,** retains a pressure ranging from 1 to 16 bar. Hence, upon pressurising the tail gas **10** to a pressure about the pressure of the compressed air stream **34** and mixing the pressurised tail gas **52** with the compressed air stream **34,** less power is required to provide the necessary total amount of compressed gas to the mixing apparatus **35.** By ensuring that the temperature in the burner is maintained in the range of 800 to 950 °C, it is ensured that, despite the demand on the means for pressurising **53** and less power being produced from the tail gas expander **7** due to less tail gas gas **5** being expanded, a net reduction of the power consumption by the compressor train is retained. In addition, in particular by providing a separate supply of high-pressure oxygen or oxygen-rich gas, it is ensured that the oxygen and ammonia concentrations in the ammonia converter **37** allow for the production of nitric acid of a commercial grade.

In addition to the net saving in the power consumption by the compressor train mentioned above, the inventors have identified that, the recirculation of part of the tail gas **5** results in the temperature of the gaseous NOₓ stream **15** at the outlet of the ammonia converter **37** being such that the heat exchange between the gaseous NOₓ stream **15** and the tail gas **5** is more efficient: hence, in case the tail gas heater is present and the tail gas **5** is heated, the size of the heat exchanger **43** and of the coolers **38** can be decreased. Further, as less tail gas **5** is directed to the tail gas expander and, ultimately, to the atmosphere, the NOₓ emissions arising from the tail gas are reduced.

In one embodiment according to the system of the disclosure, the system further comprises a tail gas heater **43,** having an inlet **46** in fluid communication with the absorption tail gas outlet **6** and an outlet **47** in fluid communication with the tail gas expander inlet **8,** positioned upstream from the water cooler/condenser **38** for heating the tail gas **5** coming from the absorption tower **41** to a temperature ranging between 200 to 650 °C with the heat from the NOₓ gas/steam mixture **15** coming from the ammonia converter **37,** and wherein means for splitting **55** the tail gas **5** is positioned upstream from the tail gas heater **43.**

In one embodiment according to the system of the disclosure, the system further comprises a tail gas heater **43,** having an inlet **46** in fluid communication with the absorption tail gas outlet **6** and an outlet **47** in fluid communication with the tail gas expander inlet **8,** positioned upstream from the water cooler/condenser **38** for heating the tail gas **5** coming from the absorption tower **41** to a temperature ranging between 200 to 650 °C with the heat from the NOₓ gas/steam mixture **15** coming from the ammonia converter **37,** and wherein means for splitting **55** the tail gas **5** is positioned downstream from the tail gas heater **43.**

The person skilled in the art will understand that this is possible to compress either one of the tail gas **5** or the heated tail gas **5** in fluid communication with the tail expander inlet **8** or a mixture thereof.

The choice of the point from which the tail gas **5** is recirculated, that is upstream or downstream the tail gas heater **43,** influences the temperature of the gas mixture **14,** and thereby, the efficiency of the combustion in the burner. The system of the disclosure provides the necessary flexibility for the person skilled in the art to choose where to recirculate the tail gas **5** from. Thereby, he/she can achieve the optimal temperature for the gas mixture **14,** depending on parameters including, for example, the gas volume flown to or the catalyst present in the converter **37,** as well as the ratio of oxygen to ammonia in the gas mixture **14.**

In one embodiment according to the system of the disclosure, the source of pressurised oxygen-rich gas **50** is supplied by a high pressure water electrolyser. Stated differently, in particular embodiments, the system of the present disclosure comprises a high-pressure water electrolyser, wherein the high-pressure water electrolyser, in particular its anode, is in fluid communication with the compressed air stream, to provide an oxygen-rich gas/compressed air stream mixture.

A water electrolyser is a device for the electrolysis of water, being the decomposition of water into oxygen and hydrogen gas, due to the passage of an electric current therethrough. This technique can be used to make hydrogen gas, a main component of hydrogen fuel, and oxygen gas. A suitable high pressure water electrolyser may comprise an anode producing oxygen gas according to the reaction

2 OH- = H₂O + ½ O₂ + 2 e-;

a cathode, producing hydrogen gas according to the reaction

2 H₂O + 2 e- = H₂ + 2 OH- ;

an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture. The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the standard potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. The electrolyser may be operated at a temperature of 50 to 80 °C, or 60 to 80 °C, and a gas pressure of 9 to 30 bar, preferably 15 to 30 bar.

A high pressure water electrolyser hence results in the production of pressurised hydrogen at the cathode and pressurised oxygen at the anode. What is required to perform high pressure electrolysis is to pressurize the water used in the electrolysis process. As pressurising water requires less power than pressuring a gas, the use of a high pressure water electrolyser results in the production of pressurised oxygen-rich gas **50** at minimized power consumption.

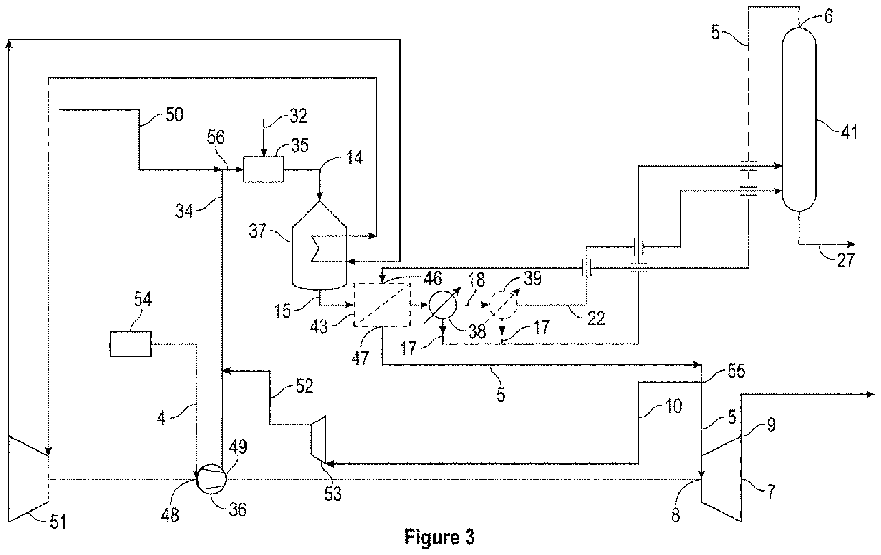

Reference is made to Figure 3. In one embodiment according to the system of the disclosure, the system further comprises a source of oxygen-rich gas **54** having a pressure at least equal to atmospheric pressure, in fluid communication with the inlet **48** of the air compressor **36.**

The presence of the source of oxygen-rich gas **54** implies that less air is to be pressurised in order to achieve the content of oxygen achieved in the prior art process at the outlet of the air compressor **36.** As a result, the power demand on the air compressor **36** is reduced.

Reference is made to Figures 2A, 2B and 3. In one embodiment according to the system of the disclosure, the system further comprises an additional source of pressurised oxygen-rich gas (not shown) in fluid communication with an area downstream the absorption tower **41** and upstream the means for pressurising **53.**

The oxygen-rich gas can be fed either upstream or downstream the means for splitting **55.** When oxygen-rich gas from such additional source is fed downstream the absorption tower **41,** less air is to be pressurised in order to achieve the content of oxygen achieved in the prior art process at the outlet of the air compressor **36.** As a result, the power demand on the air compressor **36** is reduced. Further, additional power will be generated through the tail gas expander **7.** In addition, the power demand on the means for pressuring **53** is decreased, in particular if the oxygen-rich gas from such additional source is provided by a high pressure water electrolyser, producing pressurised oxygen-rich gas at less power than through pressurising oxygen gas, as pressurising the water being electrolysed in the electrolyser consumes less power than pressurising a gas.

In addition, additional pressurised oxygen-rich gas may be supplied upstream the absorption tower, which improves the absorption of NOₓ gases in the absorption tower, which, in its turn, results in additional nitric acid production and reduction of the emissions to the atmosphere. In addition, or alternatively, the size of the absorption tower **41** can be reduced.

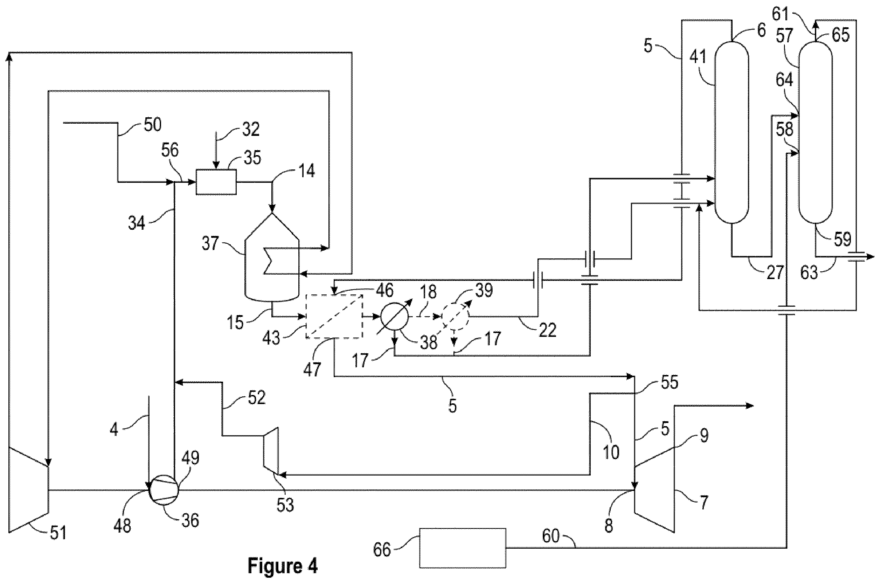

Reference is made to Figure 4. In one embodiment according to the system of the disclosure, the system further comprises a bleacher **57** for bleaching raw nitric acid-containing residual NOₓ gas, comprising an inlet **58** for an oxygen-rich bleaching gas 60, an inlet **64** for the stream of raw nitric acid-containing residual NOₓ gas **27,** an outlet **59** for bleached nitric acid **63** and an outlet **65** for bleaching gases **61,** wherein the outlet **65** for the bleaching gases **61** is in fluid communication with the gaseous NOₓ stream **22.**

In this way, an efficient use of an oxygen-rich bleaching gas is made to increase the oxygen content in the absorption tower **41,** thereby increasing the absorption of the NOₓ gases and reducing the corresponding emissions to air. In particular, the oxygen-rich bleaching gas **60** is provided by a high pressure water electrolyser **66:** as less energy is required to pressurise water than to pressurise oxygen gas, pressurised oxygen gas is obtained at minimum power consumption. The person skilled in the art will understand that the pressure of the bleaching gas **60** must be such that upon recirculating the bleaching gases **61** to the absorption tower **41,** the pressure in the absorption tower **41** is about the pressure in the ammonia converter **37.** Consequently, depending upon the pressure at which the water electrolyser **66** is operated, the pressure can be adjusted and decreased accordingly with means conventional in the state-of-the art, for example pressure regulating valves (not shown). In addition, less secondary air must be compressed and supplied by the air compressor **36** to the bleacher **57,** which results in savings in the power demand by the air compressor **36.** Advantageously, the pressurised oxygen-rich gas produced by the high pressure water electrolyser **66** can be the source of all streams **50, 54,** and **66.**

### Method for producing nitric acid

In another aspect of the disclosure, a method for producing nitric acid at reduced power consumption is disclosed. The method comprises the steps of a) compressing air in an air compressor **36,** thereby producing a compressed air stream **34** having a pressure P1; b) mixing pressurised oxygen-rich gas **50** having a pressure higher than P1 with the compressed air stream **34,** thereby obtaining an oxygen-rich gas/compressed air stream mixture **56;** c) mixing the oxygen-rich gas/compressed air stream mixture**56** with an ammonia gas stream **32** in a mixing apparatus **35,** thereby producing an ammonia/oxygen-enriched air mixture **14,** such as to achieve an oxygen to ammonia molar ratio ranging from 1.3 to 9; d) oxidising ammonia in the ammonia/oxygen-enriched air mixture **14** in an ammonia converter **37** at a temperature ranging from 800 to 950 °C, thereby producing a gaseous NOₓ gas/steam mixture **15,** comprising water and nitric oxide; e) converting the steam generated in the ammonia converter **37** or from the gaseous NOₓ gas/steam mixture **15** into power; f) separating and condensing steam from NOₓ gas in the gaseous NOₓ gas/steam mixture **15,** thereby generating an aqueous diluted nitric acid mixture **17** and a gaseous NOₓ stream **22,** in a water cooler/condenser **38;** g) absorbing the gaseous NOₓ stream **22** in an absorption tower **41,** thereby producing a stream of raw nitric acid-containing residual NOₓ gas **27** and a tail gas **5** comprising NOₓ gases; and h) expanding the tail gas **5** or the heated tail gas **5** in a tail gas expander **7;**
The method is characterised in that it further comprises the steps of i) pressurising part of the tail gas **5** obtained from step g) obtained from the combination step g) and step h) to a pressure about P1, thereby generating a pressurised tail gas **52;** j) mixing the pressurised tail gas **52** with the compressed air stream **34;** k) measuring the temperature in the ammonia converter **37;** and l) adjusting the amount of the total gas volume being pressurised in step i) if the temperature measured in step k) is outside the range of 800-950 °C, such that the temperature in the ammonia converter is maintained in the range of 800 to 950 °C.

The inventors have realised that upon recirculating part of the tail gas **5** to the compressed air stream **34,** at the pressure P1 of the compressed air stream **34,** downstream the air compressor **36** and upstream the ammonia converter **37,** while at the same time feeding pressurised oxygen **50** to the compressed air stream **34,** and maintaining the temperature in the ammonia converter **37** in the range of 800 to 950 °C and the oxygen to ammonia molar ratio in the ammonia converter **37** between 1.3 and 9, net reduction in the power consumption by the compressor train can be achieved. Albeit the tail gas **5** leaving the absorption tower **41** is less pressurised than the compressed air stream **34** leaving the air compressor **36,** the corresponding pressure drop only accounts for 0.5 to 1.5 bar. Consequently, the tail gas **5,** whether upstream or downstream the tail gas heater **43,** retains a pressure ranging from 1 to 16 bar. Hence, upon pressurising the tail gas **10** to a pressure about P1 and mixing the pressurised tail gas **52** with the compressed air stream **34,** less power is required to provide the necessary total amount of compressed gas to the mixing apparatus **35.** By ensuring that the temperature in the burner is maintained in the range of 800 to 950 °C, it is ensured that, despite the demand on the means for pressurising **53** and less power being produced from the tail gas expander **7** due to less tail gas **5** being expanded, a net power reduction consumption by the compressor train is retained. In addition, it is ensured that the oxygen and ammonia concentrations in the ammonia converter **37** allow for the production concentrated acid of commercial grade.

In addition to the net saving in the power consumption by the compressor train mentioned above, the inventors have identified that, the recirculation of part of the tail gas **5** results in the temperature of the gaseous NOₓ stream **15** at the outlet of the ammonia converter **37** being such that the heat exchange between the gaseous NOₓ stream **15** and the tail gas **5** is more efficient: hence, in case the tail gas heater is present and the tail gas **5** is heated, the size of the heat exchanger **43** and of the coolers **38** can be decreased. Further, as less tail gas **5** is directed to the tail gas expander and, ultimately, to the atmosphere, the NOₓ emissions arising from the tail gas are reduced.

In one embodiment according to the method of the disclosure, the method further comprises the step of m) heating the tail gas **5** obtained in step g) to a temperature ranging from 200 to 650 °C in a tail gas heater **43** positioned upstream from the water cooler/condenser **38** with the heat from the NOₓ gas/steam mixture **15** coming from the ammonia converter **37.**

In one embodiment according to the method of the disclosure, the method further comprises the step of m') heating the tail gas 5 obtained in step g) to a temperature ranging from 200 to 650 °C in a tail gas heater **43** positioned upstream from the water cooler/condenser **38** with the heat from the NOₓ gas/steam mixture **15** coming from the ammonia converter **37,** wherein, in step i), part of the tail gas **5** obtained in step g) or in step m') is pressurised.

The person skilled in the art will understand that this is possible to compress either one of the tail gas **5** or the heated tail gas **5** in fluid communication with the tail expander inlet **8** or a mixture thereof.

The choice of the point from which the tail gas **5** is recirculated, that is upstream or downstream the tail gas heater **43,** influences the temperature of the gas mixture **14,** and thereby, the efficiency of the combustion in the burner. The system of the disclosure provides the necessary flexibility for the person skilled in the art to choose where to recirculate the tail gas **5** from. Thereby, he/she can achieve the optimal temperature for the gas mixture **14,** depending on parameters including, for example, the gas volume flown to or the catalyst present in the converter **37,** as well as the ratio of oxygen to ammonia in the gas mixture **14.**

In one embodiment according to the method of the disclosure, the method further comprises the step of n) operating a high pressure water electrolyser in order to produce the oxygen gas or oxygen-rich gas **50** used in the mixing step b).

A high pressure water electrolyser hence results in the production of pressurised hydrogen at the cathode and pressurised oxygen at the anode. What is required to perform high pressure electrolysis is to pressurize the water used in the electrolysis process. As pressurising water requires less power than pressuring a gas, the use of a high pressure water electrolyser results in the production of pressurised oxygen-rich gas **50** at minimized power consumption. Mixing step b) may thus comprise the steps of operating a high pressure water electrolyser, such as at a temperature of 50 to 80 °C, or 60 to 80 °C, and a gas pressure of 9 to 30 bar, preferably 15 to 30 bar, thereby producing a pressurized oxygen or oxygen-rich gas **50** having a pressure higher than P1, and mixing the pressurized oxygen or oxygen-rich gas **50** with the compressed air stream **34.**

In one embodiment according to the method of the disclosure, the method further comprises the step of o) sending an oxygen-rich gas having a pressure at least equal to atmospheric pressure **54** to the inlet **48** of the air compressor **36.**

The presence of the source of oxygen-rich gas **54** implies that less air is to be pressurised in order to achieve the content of oxygen achieved in the prior art process at the outlet of the air compressor **36.** As a result, the power demand on the air compressor **36** is reduced.

In one embodiment according to the method of the disclosure, the method further comprises the step of p) feeding a source of pressurised oxygen-rich gas downstream the absorption tower **41** and upstream the means for compressing **53.** In particular, the pressurized oxygen or oxygen-rich gas may be produced by operating a high pressure electrolyzer.

The oxygen-rich gas can be fed either upstream or downstream the means for splitting **55.** When oxygen-rich gas from such additional source is fed downstream the absorption tower **41,** less air is to be pressurised in order to achieve the content of oxygen achieved in the prior art process at the outlet of the air compressor **36.** As a result, the power demand on the air compressor **36** is reduced. Further, additional power will be generated through the tail gas expander **7.** In addition, the power demand on the means for pressuring **53** is decreased, in particular if the oxygen-rich gas from such additional source is provided by a high pressure water electrolyser, producing pressurised oxygen-rich gas at less power than through pressurising oxygen gas, as pressurising the water being electrolysed in the electrolyser consumes less power than pressurising a gas.

Reference is made to Figure 4. In one embodiment according to the method of the disclosure, the method further comprises the steps of q) feeding oxygen-rich gas as the bleaching gas **60** to a bleacher **57** for bleaching raw nitric acid-containing residual NOₓ gas **27;** r) bleaching the nitric acid **62** in the bleacher **57,** thereby generating bleached nitric acid **63** and bleaching gases **61;** and s) mixing the bleaching gases **61** with the gaseous NOₓ stream **22.**

In this way, an efficient use of an oxygen-rich bleaching gas is made to increase the oxygen content in the absorption tower **41,** thereby increasing the absorption of the NOₓ gases in step g) and reducing the corresponding emissions to air. In particular, the oxygen-rich bleaching gas **60** is provided by a high pressure water electrolyser **66:** as less energy is required to pressurise water than to pressurise oxygen gas, pressurised oxygen gas is obtained at minimum power consumption. The person skilled in the art will understand that the pressure of the bleaching gas **60** must be such that upon recirculating the bleaching gases **61** to the absorption tower **41,** the pressure in the absorption tower **41** is about the pressure in the ammonia converter **37.** Consequently, depending upon the operating pressure of the water electrolyser **66,** the pressure can be adjusted and decreased accordingly with means conventional in the state-of-the art, for example pressure regulating valves (not shown). In addition, less secondary air must be compressed and supplied by the air compressor **36** to the bleacher **57,** which results in savings in the power demand by the air compressor **36.** Advantageously, the pressurised oxygen-rich gas produced by the high pressure water electrolyser **66** can be the source of all streams **50** , **54,** and **66.**

### Use of the system of the disclosure

In another aspect of the disclosure, the use of the system the disclosure for performing the method of the disclosure is disclosed.

### Method for revamping a system for producing nitric acid

In another aspect of the disclosure, a method for revamping a system for producing nitric acid comprising an air compressor **36** for compressing air to a pressure P1, comprising an inlet **48** and an outlet **49,** to provide in a compressed air stream **34;** optionally a source of pressurised oxygen-rich gas **50** having a pressure higher than the pressure of the compressed air stream **34,** in fluid communication with the compressed air stream **34,** to provide in an oxygen-rich gas/compressed air stream mixture **56;** a mixing apparatus **35** for mixing the oxygen-rich gas/compressed air stream mixture **56** with an ammonia gas stream **32,** optionally pre-heated in a pre-heater, to provide in an ammonia/oxygen-enriched air mixture **14;** an ammonia converter **37** for oxidising ammonia in the ammonia/oxygen-enriched air mixture **14,** to provide in a NOₓ gas/steam mixture **15,** comprising water and nitric oxide; means for measuring (not shown) the temperature in the ammonia converter **37;** means for regulating the concentration of ammonia and of oxygen in the ammonia converter **37;** a steam turbine **51** or an electric motor and means for converting steam into electricity, for converting steam into power, in fluid communication with the ammonia converter **37** or the NOₓ/gas steam mixture **15;** a water cooler/condenser **38,** for separating and condensing steam from NOₓ gas in the gaseous NOₓ gas/steam mixture **15,** thereby generating an aqueous diluted nitric acid mixture **17** and a gaseous NOₓ stream **22;** an absorption tower **41** downstream the water cooler/condenser **38,** for absorbing NOₓ gases in water, to provide in a stream of raw nitric acid-containing residual NOₓ gas **27** and a tail gas **5** comprising NOₓ gases, comprising an absorption tower tail gas outlet **6** for evacuating the tail gas **5;** and a tail gas expander **7** for expanding the tail gas downstream of the absorption tower comprising a tail gas expander inlet **8** in fluid communication with the absorption tower tail gas outlet **6,** and a tail gas expander outlet **9;**
into a system according to the disclosure is disclosed.

The method comprises the steps of introducing means for splitting **55** the tail gas **5** into a first tail gas stream **5** directed to the tail gas expander inlet **8** and a second tail gas stream **10** directed to means for pressurising **53** for pressurising the tail gas stream **10** to a pressure of about P1 in fluid communication with the compressed air stream **34,** to provide in a pressurised tail gas stream **52** joining the compressed air stream **34;** and introducing means for adjusting the amount of tail gas **5** being splitted into the first tail gas stream **5** directed to the tail gas expander inlet **8** and a second tail gas stream **10** directed to means for pressurising **53.** In certain embodiments, in case the existing system does not comprise a source of pressurized oxygen-rich gas, the revamping method further comprises the step of introducing a source of pressurising oxygen-rich gas **50,** such as a high pressure electrolyzer, said pressurized oxygen rich gas having a pressure higher than the pressure of the compressed air stream **34,** and fluidly connecting the source of pressurized oxygen-rich gas with the compressed air stream **34,** to provide in an oxygen-rich gas/compressed air stream mixture **56.**

As defined herein, means for adjusting the concentration of ammonia and oxygen in the ammonia converter **37** are any suitable means for assessing the amount of ammonia to be introduced in the system from a measure of the oxygen concentration, or the amount of oxygen to be introduced in the system from a measure of the ammonia concentration, such that the oxygen to ammonia molar ratio will range from 1.3 to 9. The oxygen or ammonia concentration can be determined, for example, from a measurement in the gas phase using a process gas analyser. The oxygen or ammonia concentration can also be determined from computing using the concentration of the oxygen- or ammonia source being introduced in the system, the flow at which the source is introduced in the system, and the relative flow values at which the gases is mixed. Using the oxygen or ammonia concentration, the relevant flow of ammonia or oxygen respectively to be introduced in the system is, in turn, determined and is used in controlling the flow of ammonia or oxygen, from gaseous sources of ammonia or oxygen respectively at pre-determined concentrations. Controlling of the flow of gaseous ammonia or oxygen can, for example, be achieved through flow control valves. In particular, the means is an integrated process control system, in which the concentration of oxygen or ammonia respectively is measured, and the relevant flow of ammonia or oxygen respectively is thereby determined, thus controlling the flow of ammonia or oxygen, from gaseous sources of ammonia or oxygen respectively at pre-determined concentrations.

As defined herein, means for measuring the temperature are any means suitable for measuring and indicating the temperature in the ammonia oxidation burner. In particular, the means for measuring the temperature is a thermocouple or a thermocouple or a thermometer suitable for measuring and indicating a temperature as high as 1000 °C. More in particular, the means for measuring the temperature is an infrared thermometer for measuring and indicating a temperature as high as 1000 °C.

As defined herein, means for converting steam into power are any mean for achieving power from steam. In particular those means are a steam turbine connected to an electric generator.

As defined herein, means for splitting are any means suitable for splitting the tail gas **5** such as to generate, in addition to the tail gas **5,** another gas stream **10** of tail gas directed to the means for pressurising **53.** In particular, the means for splitting is a T-connection having one inlet and two outlets, such that a gas flowing through the inlet of the T-connection is splitted into two gas streams of identical chemical composition.

As defined herein, means for compressing are any suitable means for increasing the pressure of the tail gas **10** in fluid communication with the compressed air stream **34.** In particular, the means for compressing is a gas compressor or a gas ejector through which a motive gas is flowing at a higher velocity than the tail gas **10.**

As defined herein, means for adjusting the amount of tail gas **5** being splitted into the first tail gas stream **5** directed to the tail gas expander inlet **8** and the second tail gas stream **10** directed to the means for pressurising **53,** are any means for controlling the splitting in the means for splitting **55.** In particular, the means for splitting **55** is a T-connection as described above and the means for adjusting is an orifice or a guide vane or a flow control valve at one or both of the outlets of the T-connection. Even more in particular, the means is an integrated process control system, in which the temperature in the ammonia converter **37** is determined through the means for measuring the temperature. The temperature in the ammonia converter **37** is then used for controlling a flow control valve in the means for splitting **55,** thereby controlling the splitting of the tail gas **5,** in order for the measured temperature to be maintained in the range of 800-950 °C.

### Examples

### 1. Recirculation of tail-gas at 40%

Reference is made to Figure 2A. Ambient air **4** was compressed in an air compressor **36,** generating the compressed air stream **34.** Pressurized oxygen-rich gas **50** at a pressure of 8 bar was mixed with the compressed air stream **34,** thereby producing an oxygen-rich gas/compressed air stream mixture **56.** Ammonia **32** was mixed with the oxygen-rich gas/compressed air stream mixture **56** in a mixing apparatus **35,** such as to achieve an oxygen to ammonia molar ration ranging from 1.3 to 9. The resulting ammonia/oxygen-enriched air mixture **14** was fed to an ammonia converter **37,** at a temperature ranging from 800 to 950 °C and operating at a pressure of 6.2 bar. In the ammonia converter **37,** ammonia was oxidized over a mixed platinum/rhodium catalyst, thus obtaining a NOₓ gas/steam mixture **15,** comprising water and nitric oxide (NO). The heat of the mixture coming out of the ammonia converter was recovered using the steam turbine **51** and also by heating the tail gas **5** as will be described below. The NOₓ gas/stream mixture was subsequently cooled down in a water cooler/condenser **38** to temperature where the water condenses, and an aqueous diluted nitric acid mixture **17** was separated from a gaseous NOₓ stream **18.** Subsequently, the gaseous NOₓ stream was further oxidized to further convert the NO to NO₂ and N₂O₄, and cooled down again in a cooler/separator **39** to separate out another aqueous diluted nitric acid mixture **17** which was directed to an absorption tower **41.** On the other end, the gaseous NOₓ stream **22** was sent to the absorber unit **6** too. Inside the absorber unit **6,** the NOₓ gas reacted with water to produce the tail gas **5** and a stream of raw nitric acid also containing residual NOₓ gas, which was fed to a bleacher (not shown). The heat from the gaseous NOₓ stream **15** was used for heating the tail gas **5** in the tail gas heater **43** to 450 °C. The heated tail gas stream **5** was splitted over a T-tube, such that 40% of the heated tail gas **5** was splitted, thereby producing the heated tail gas **10.** The heated tail gas **10** was pressurised using an additional gas compressor **53,** then mixed with the compressed air stream **34.** The temperature inside the ammonia converter **37** was measured and established to have remained in the range of 800 to 950 °C. The residual 60% of tail gas was sent to the tail gas expander **7.** The residual NOₓ gas in the raw nitric acid stream **27** was then stripped out with a gaseous medium (not shown) such as an oxygen-containing gas or air, inside the bleacher unit (not shown); the bleacher unit was generally operated at about the same pressure as the ammonia converter of 6.2 bar. The drive power for the air compressor **36** and the gas compressor **53** originated from the tail gas expander **7** and the steam turbine **51.** The net power associated to the air compressors **36** and **53** and the tail gas expander **7** and the steam turbine **51** was 77 kW/h/t 100% HNO₃. This power was provided by the steam turbine **51.**

### 2. Recirculation of tail-gas at 65% and addition of oxygen to the air compressor

Reference is made to Figure 3. Oxygen enriched air **54** and ambient air **32** were compressed in an air compressor **36,** generating the stream **34.** Pressurized oxygen-rich gas **50** at a pressure of 8 bar was mixed with the compressed air stream **34,** thereby producing an oxygen-rich gas/compressed air stream mixture **56.** Ammonia **32** was mixed with the oxygen-rich gas/compressed air stream mixture **56** in a mixing apparatus **35,** such as to achieve an oxygen to ammonia molar ration ranging from 1.3 to 9. The resulting ammonia/oxygen-enriched air mixture **14** was fed to an ammonia converter **37,** at a temperature ranging from 800 to 950 °C and operating at a pressure of 6.2 bar. In the ammonia converter **37,** ammonia was oxidized over a mixed platinum/rhodium catalyst, thus obtaining a NOₓ gas/steam mixture **15,** comprising water and nitric oxide (NO). The heat of the mixture coming out of the ammonia converter was recovered using the steam turbine **51** and also by heating the tail gas **5** as will be described below. The NOx gas/stream mixture was subsequently cooled down in a water cooler/condenser **38** to temperature where the water condenses, and an aqueous diluted nitric acid mixture **17** was separated from a gaseous NOₓ stream **18.** Subsequently, the LP gaseous NOₓ stream was further oxidized to further convert the NO to NO₂ and N₂O₄, and cooled down again in a cooler/separator **39** to separate out another aqueous diluted nitric acid mixture **17** which was directed to an absorption tower **41.** On the other end, the gaseous NOx stream **22** was sent to the absorber unit **6** too. Inside the absorber unit **6,** the NOx gas reacted with water to produce the tail gas **5** and a stream of raw nitric acid also containing residual NOₓ gas, which was fed to a bleacher (not shown). The heat from the gaseous NOₓ stream **15** was used for heating the tail gas **5** in the tail gas heater **43** to 450 °C. The heated tail gas stream **5** was splitted over a T-tube, such that 65% of the heated tail gas **5** was splitted, thereby producing the heated tail gas **10.** The heated tail gas **10** was pressurised using an additional gas compressor **53,** then mixed with the compressed air stream **34.** The temperature inside the ammonia converter **37** was measured and established to have remained in the range of 800 to 950 °C. The residual 35% of tail gas was sent to the tail gas expander **7.** The residual NOₓ gas in the raw nitric acid stream **27** was then stripped out with a gaseous medium (not shown) such as an oxygen-containing gas or air, inside the bleacher unit (not shown), operated at about the same pressure as the ammonia converter of 6.2 bar. The drive power for both the air compressor **36** and the gas compressor **53** originated from the tail gas expander **7** and the steam turbine **51.** The net power associated to the air compressor **36,** the compressor **53** and the tail gas expander **7** was 68 kWh/t 100% HNO₃. This power was produced by the steam turbine **51.**

### 3. Comparative example: no recirculation of tail-gas

Reference is made to Figure 1. Ambient air **4** was compressed in an air compressor **36,** generating the compressed air stream **34.** Pressurized oxygen-rich gas **50** at a pressure of 8 bar was mixed with the compressed air stream **34,** thereby producing an oxygen-rich gas/compressed air stream mixture **56.** Ammonia **32** was mixed with the oxygen-rich gas/compressed air stream mixture **56** in a mixing apparatus **35,** such as to achieve an oxygen to ammonia molar ration ranging from 1.3 to 9. The resulting ammonia/oxygen-enriched air mixture **14** was fed to an ammonia converter **37,** operating at a pressure of 5.2 bar. In the ammonia converter **37,** ammonia was oxidized over a mixed platinum/rhodium catalyst, thus obtaining a low-pressure NOx gas/steam mixture **15,** comprising water and nitric oxide (NO). The heat of the mixture coming out of the ammonia converter was recovered using the steam turbine **51** and also by heating the tail gas **5** as will be described below. The NOx gas/stream mixture was subsequently cooled down in a water cooler/condenser **38** to temperature where the water condenses, and an aqueous diluted nitric acid mixture **17** was separated from a gaseous NOx stream **18.** Subsequently, the LP gaseous NOx stream was further oxidized to further convert the NO to NO₂ and N₂O₄, and cooled down again in a cooler/separator **39** to separate out another aqueous diluted nitric acid mixture **17** which was directed to an absorption tower **41.** On the other end, the gaseous NOx stream **22** was sent to the absorber unit **6** too. Inside the absorber unit **6,** the high pressure NOx gas reacted with water to produce the tail gas **5** and a stream of raw nitric acid also containing residual NOx gas, which was fed to a bleacher (not shown). The heat from the gaseous NOx stream **15** was used for heating the tail gas **5** in the tail gas heater **43** to 450 °C. The entire tail gas stream **5** was sent to the tail gas expander **7.** The residual NOx gas in the raw nitric acid stream **27** was then stripped out with a gaseous medium (not shown) such as an oxygen-containing gas or air, inside the bleacher unit (not shown); the bleacher unit was generally operated at about the same pressure as the ammonia converter, of 5.2 bar. The drive power for the air compressor **36** originated from the tail gas expander **7** and the steam turbine **51.** The net power associated to the air compressor **36,** and the tail gas expander **7** was 153 kW/h/t 100% HNO₃. This power was produced by the steam turbine **51.**

Therefore, when compared to the example 1, a net power of 76 kWh/t 100% HNO₃ (50%) was saved upon recirculating 40% of the tail gas.

Therefore, when compared to the example 2, a net power of 85 kWh/t 100% HNO₃ (55%) was saved upon recirculating 65% of the tail gas.

## Claims

1. A system for producing nitric acid at reduced power consumption, comprising:
• an air compressor for compressing air to a pressure P1, comprising an inlet and an outlet, to provide in a compressed air stream;
• a source of pressurised oxygen-rich gas having a pressure higher than P1, such as a high pressure water electrolyser, in fluid communication with the compressed air stream, to provide in an oxygen-rich gas/compressed air stream mixture;
• a mixing apparatus for mixing the oxygen-rich gas/compressed air stream mixture with an ammonia gas stream, to provide in an ammonia/oxygen-enriched air mixture;
• an ammonia converter for oxidising ammonia in the ammonia/oxygen-enriched air mixture, to provide in a NOₓ gas/steam mixture, comprising water and nitric oxide;
• means for measuring the temperature in the ammonia converter;
• means for regulating the concentration of ammonia and of oxygen in the ammonia converter;
• a steam turbine or an electric motor and means for converting steam into electricity, for converting steam into power, in fluid communication with the ammonia converter or the NOₓ/gas steam mixture;
• a water cooler/condenser for separating and condensing steam from NOₓ gas in the gaseous NOₓ gas/steam mixture, to provide in an aqueous diluted nitric acid mixture and a gaseous NOₓ stream;
• an absorption tower downstream the water cooler/condenser, for absorbing the NOₓ gases from the gaseous NOₓ stream in water, to provide in a stream of raw nitric acid-containing residual NOₓ gas and a tail gas comprising NOₓ gases, comprising an absorption tower tail gas outlet for evacuating the tail gas; and
a tail gas expander for expanding the tail gas downstream of the absorption tower comprising a tail gas expander inlet in fluid communication with the absorption tower tail gas outlet, and a tail gas expander outlet;
**characterized in that** the system further comprises:
• means for splitting the tail gas into a first tail gas stream directed to the tail gas expander inlet and a second tail gas stream directed to means for pressurising for pressurising the tail gas stream to a pressure of about P1 in fluid communication with the compressed air stream, to provide in a pressurised tail gas stream joining the compressed air stream; and
• means for adjusting the amount of tail gas being splitted into the tail gas stream directed to the tail gas expander inlet and the tail gas stream directed to means for pressurising.

2. The system according to claim 1, wherein the system further comprises a tail gas heater, having an inlet in fluid communication with the absorption tail gas outlet and an outlet in fluid communication with the tail gas expander inlet, positioned upstream from the water cooler/condenser for heating the tail gas coming from the absorption tower to a temperature ranging between 200 to 650 °C with the heat from the NOₓ gas/steam mixture coming from the ammonia converter, and wherein means for splitting the tail gas is positioned upstream from the tail gas heater.

3. The system according to any one of claims 1 to 2, wherein the system further comprises a tail gas heater, having an inlet in fluid communication with the absorption tail gas outlet and an outlet in fluid communication with the tail gas expander inlet, positioned upstream from the water cooler/condenser for heating the tail gas coming from the absorption tower to a temperature ranging between 200 to 650 °C with the heat from the NOₓ gas/steam mixture coming from the ammonia converter, and wherein means for splitting the tail gas is positioned downstream from the tail gas heater.

4. The system according to any one of claims 1 to 3, wherein the source of pressurised oxygen-rich gas is supplied by a high pressure water electrolyser.

5. The system according to any one of claims 1 to 4, further comprising a source of oxygen-rich gas having a pressure at least equal to atmospheric pressure, in fluid communication with the inlet of the air compressor.

6. The system according to any one of claims 1 to 5, further comprising an additional source of pressurised oxygen-rich gas in fluid communication with an area downstream the absorption tower and upstream the means for pressurising.

7. The system according to any one of claims 1 to 6, further comprising a bleacher for bleaching raw nitric acid-containing residual NOₓ gas, comprising an inlet for an oxygen-rich bleaching gas, an inlet for the stream of raw nitric acid-containing residual NOₓ gas, an outlet for bleached nitric acid and an outlet for bleaching gases, wherein the outlet for the bleaching gases is in fluid communication with the gaseous NOₓ stream.

8. A method for producing nitric acid at reduced power consumption, comprising the steps of:
a) compressing air in an air compressor, thereby producing a compressed air stream having a pressure P1;
b) mixing pressurised oxygen-rich gas having a pressure higher than P1 with the compressed air stream, thereby obtaining an oxygen-rich gas/compressed air stream mixture;
c) mixing the oxygen-rich gas/compressed air stream mixture with an ammonia gas stream in a mixing apparatus, thereby producing an ammonia/oxygen-enriched air mixture, such as to achieve an oxygen to ammonia molar ratio ranging from 1.3 to 9;
d) oxidising ammonia in the ammonia/oxygen-enriched air mixture in an ammonia converter at a temperature ranging from 800 to 950 °C, thereby producing a gaseous NOₓ gas/steam mixture, comprising water and nitric oxide;
e) converting the steam generated in the ammonia converter or from the gaseous NOₓ gas/steam mixture into power;
f) separating and condensing steam from NOₓ gas in the gaseous NOₓ gas/steam mixture, thereby generating an aqueous diluted nitric acid mixture and a gaseous NOₓ stream, in a water cooler/condenser;
g) absorbing the gaseous NOₓ stream in an absorption tower, thereby producing a stream of raw nitric acid-containing residual NOₓ gas and a tail gas comprising NOₓ gases; and
h) expanding the tail gas or the heated tail gas in a tail gas expander;
**characterised in that** the method further comprises the steps of:
i) pressurising part of the tail gas obtained from step g) to a pressure about P1, thereby generating a pressurised tail gas;
j) mixing the pressurised tail gas with the compressed air stream;
k) measuring the temperature in the ammonia converter; and
l) adjusting the gas volume being pressurised in step i) if the temperature measured in step k) is outside the range of 800-950 °C, such that the temperature in the ammonia converter is maintained in the range of 800 and 950 °C.

9. The method according to claim 8, further comprising the step of:
m) heating the tail gas obtained in step g) to a temperature ranging from 200 to 650 °C in a tail gas heater positioned upstream from the water cooler/condenser with the heat from the NOₓ gas/steam mixture coming from the ammonia converter.

10. The method according to claim 8, further comprising the step of:
m') heating the tail gas obtained in step g) to a temperature ranging from 200 to 650 °C in a tail gas heater positioned upstream from the water cooler/condenser with the heat from the NOₓ gas/steam mixture coming from the ammonia converter;
wherein, in step i), part of the tail gas obtained in step g) or in step m') is pressurised.

11. The method according to any one of claims 8 to 10, further comprising the step of:
n) operating a high pressure water electrolyser in order to produce the oxygen gas used in the mixing step b).

12. The method according to any one of claims 8 to 11, further comprising the step of:
o) sending an oxygen-rich gas having a pressure at least equal to atmospheric pressure to the inlet of the air compressor.

13. The method according to any one of claims 8 to 12, further comprising the step of:
p) feeding an additional source of pressurised oxygen-rich gas downstream the absorption tower and upstream the means for pressurising.

14. The method according to any one of claims 8 to 13, further comprising the steps of:
q) feeding an oxygen-rich bleaching gas to a bleacher for bleaching raw nitric acid-containing residual NOₓ gas;
r) bleaching the stream of raw nitric acid-containing residual NOₓ gas in the bleacher, thereby generating bleached nitric acid and bleaching gases; and
s) mixing the bleaching gases with the gaseous NOₓ stream.

15. Use of the system according to any one of claims 1 to 7 for performing the method according to any one of claims 8 to 14.

16. A method for revamping a system for producing nitric acid, wherein the existing system comprises:
• an air compressor for compressing air to a pressure P1, comprising an inlet and an outlet, to provide in a compressed air stream;
• optionally, a source of pressurised oxygen-rich gas having a pressure higher than the pressure of the compressed air stream, in fluid communication with the compressed air stream, to provide in an oxygen-rich gas/compressed air stream mixture;
• a mixing apparatus for mixing the oxygen-rich gas/compressed air stream mixture with an ammonia gas stream, to provide in an ammonia/oxygen-enriched air mixture;
• an ammonia converter for oxidising ammonia in the ammonia/oxygen-enriched air mixture, to provide in a NOₓ gas/steam mixture, comprising water and nitric oxide;
• means for measuring the temperature in the ammonia converter;
• means for regulating the concentration of ammonia and of oxygen in the ammonia converter;
• a steam turbine or an electric motor and means for converting steam into electricity, for converting steam into power, in fluid communication with the ammonia converter or the NOₓ/gas steam mixture;
• a water cooler/condenser separating and condensing steam from NOₓ gas in the gaseous NOₓ gas/steam mixture, to provide in an aqueous diluted nitric acid mixture and a gaseous NOₓ stream;
• an absorption tower downstream the water cooler/condenser for absorbing NOₓ gases in water, to provide in a stream of raw nitric acid-containing residual NOₓ gas and a tail gas comprising NOₓ gases, comprising an absorption tower tail gas outlet for evacuating the tail gas; and
• a tail gas expander for expanding the tail gas downstream of the absorption tower comprising a tail gas expander inlet in fluid communication with the absorption tower tail gas outlet, and a tail gas expander outlet;
into a system according to claims 1 to 6, comprising the steps of:
• introducing means for splitting the tail gas into a first tail gas stream directed to the tail gas expander inlet and a second tail gas stream directed to means for pressurising for pressurising the tail gas stream to a pressure of about P1 in fluid communication with the compressed air stream, to provide in a pressurised tail gas stream joining the compressed air stream; and introducing means for adjusting the amount of tail gas being splitted into the first tail gas stream directed to the tail gas expander inlet and a second tail gas stream directed to means for pressurising, and
• optionally, introducing a source of pressurised oxygen-rich gas, such as a high pressure electrolyzer, said pressurized oxygen rich gas having a pressure higher than the pressure of the compressed air stream, and fluidly connecting the source of pressurized oxygen-rich gas with the compressed air stream, to provide in an oxygen-rich gas/compressed air stream mixture.

## Patentansprüche

1. System zur Herstellung von Salpetersäure mit verringertem Stromverbrauch, umfassend:
• einen Luftkompressor zum Komprimieren von Luft auf einen Druck P1, umfassend einen Einlass und einen Auslass, um einen Druckluftstrom bereitzustellen;
• eine Quelle von druckbeaufschlagtem sauerstoffreichem Gas mit einem Druck von höher P1, wie z.B. eine Hochdruck-Wasserelektrolysevorrichtung, in Fluidverbindung mit dem Druckluftstrom, um ein sauerstoffreiches-Gas/Druckluftstrom-Gemisch bereitzustellen;
• eine Mischvorrichtung zum Mischen des sauerstoffreiches-Gas/Druckluftstrom-Gemischs mit einem Ammoniakgasstrom, um ein Ammoniak/sauerstoffangereicherte-Luft-Gemisch bereitzustellen;
• einen Ammoniakkonverter zum Oxidieren von Ammoniak in dem Ammoniak/sauerstoffangereicherte-Luft-Gemisch, um ein NO_{X}-Gas/Dampf-Gemisch, das Wasser und Stickoxid umfasst, bereitzustellen;
• Mittel zum Messen der Temperatur in dem Ammoniakkonverter;
• Mittel zum Regulieren der Konzentration von Ammoniak und von Sauerstoff in dem Ammoniakkonverter;
• eine Dampfturbine oder einen Elektromotor und Mittel zum Umwandeln von Dampf in Elektrizität, um Dampf in Leistung umzuwandeln, in Fluidverbindung mit dem Ammoniakkonverter oder dem NO_{X}-Gas/Dampf-Gemisch;
• einen Wasserkühler/Kondensator zum Abtrennen und Kondensieren von Dampf aus NO_{X}-Gas in dem gasförmigen NO_{X}-Gas/Dampf-Gemisch, um ein wässriges verdünntes Salpetersäuregemisch und einen gasförmigen NO_{X}-Strom bereitzustellen;
• einen Absorptionsturm stromabwärts des Wasserkühler/Kondensators zum Absorbieren der NO_{X}-Gase aus dem gasförmigen NO_{X}-Gasstrom in Wasser, um einen Strom von rohem Salpetersäure-enthaltendem NO_{X}-Restgas und ein Endgas, das NO_{X}-Gase umfasst, bereitzustellen, umfassend einen Absorptionsturm-Endgasauslass zum Evakuieren des Endgases; und
einen Endgasexpander zum Expandieren des Endgases stromabwärts des Absorptionsturms, umfassend einen Endgasexpandereinlass in Fluidverbindung mit dem Absorptionsturm-Endgasauslass und einen Endgasexpanderauslass;
**dadurch gekennzeichnet, dass** das System ferner umfasst:
• Mittel zum Aufteilen des Endgases in einen ersten Endgasstrom, der zu dem Endgasexpandereinlass geleitet wird, und einen zweiten Endgasstrom, der zu einem Mittel zum Druckbeaufschlagen des Endgasstroms auf einen Druck von etwa P1 in Fluidverbindung mit dem Druckluftstrom geleitet wird, um einen druckbeaufschlagten Endgasstrom bereitzustellen, der mit dem Druckluftstrom zusammenströmt; und
• Mittel zum Einstellen der Menge an Endgas, das in den Endgasstrom, der zu dem Endgasexpandereinlass geleitet wird, und den Endgasstrom, der zu dem Mittel zum Druckbeaufschlagen geleitet wird, aufgeteilt wird.

2. System nach Anspruch 1, wobei das System ferner einen Endgaserhitzer, der einen Einlass in Fluidverbindung mit dem Absorptionsendgasauslass und einen Auslass in Fluidverbindung mit dem Endgasexpandereinlass aufweist, stromaufwärts des Wasserkühler/Kondensators angeordnet aufweist, zum Erhitzen des von dem Absorptionsturm kommenden Endgases auf eine Temperatur in dem Bereich zwischen 200 und 650 °C mit der Wärme des aus dem Ammoniakkonverter kommenden NO_{X}-Gas/Dampf-Gemischs, und wobei Mittel zum Aufteilen des Endgases stromaufwärts des Endgaserhitzers angeordnet sind.

3. System nach einem der Ansprüche 1 bis 2, wobei das System ferner einen Endgaserhitzer, der einen Einlass in Fluidverbindung mit dem Absorptionsendgasauslass und einen Auslass in Fluidverbindung mit dem Endgasexpandereinlass aufweist, stromaufwärts des Wasserkühler/Kondensators angeordnet umfasst, zum Erhitzen des aus dem Absorptionsturm kommenden Endgases auf eine Temperatur in dem Bereich zwischen 200 und 650 °C mit der Wärme des aus dem Ammoniakkonverter kommenden NO_{X}-Gas/Dampf-Gemischs, und wobei Mittel zum Aufteilen des Endgases stromabwärts des Endgaserhitzers angeordnet sind.

4. System nach einem der Ansprüche 1 bis 3, wobei die Quelle von druckbeaufschlagtem sauerstoffreichem Gas von einer Hochdruck-Elektrolysevorrichtung versorgt wird.

5. System nach einem der Ansprüche 1 bis 4, ferner umfassend eine Quelle von sauerstoffreichem Gas mit einem Druck von wenigstens gleich Atmosphärendruck in Fluidverbindung mit dem Einlass des Luftkompressors.

6. System nach einem der Ansprüche 1 bis 5, ferner umfassend eine zusätzliche Quelle von druckbeaufschlagtem sauerstoffreichem Gas in Fluidverbindung mit einem Bereich stromabwärts des Absorptionsturms und stromaufwärts des Mittels zum Druckbeaufschlagen.

7. System nach einem der Ansprüche 1 bis 6, ferner umfassend einen Bleicher zum Bleichen von rohem Salpetersäure-enthaltendem NO_{X}-Restgas, umfassend einen Einlass für ein sauerstoffreiches Bleichgas, einen Einlass für den Strom von rohem Salpetersäure-enthaltendem NO_{X}-Restgas, einen Auslass für gebleichte Salpetersäure und einen Auslass für Bleichgase, wobei der Auslass für die Bleichgase in Fluidverbindung mit dem gasförmigen NO_{X}-Strom steht.

8. Verfahren zur Herstellung von Salpetersäure mit verringertem Stromverbrauch, umfassend die Schritte:
a) Komprimieren von Luft in einem Luftkompressor, um einen Druckluftstrom mit einem Druck P1 zu erzeugen;
b) Mischen von druckbeaufschlagtem sauerstoffreichem Gas mit einem Druck von höher als P1 mit dem Druckluftstrom, um ein sauerstoffreiches-Gas/Druckluftstrom-Gemisch zu erhalten;
c) Mischen des sauerstoffreiches-Gas/Druckluftstrom-Gemischs mit einem Ammoniakgasstrom in einer Mischvorrichtung, um ein Ammoniak/sauerstoffangereicherte-Luft-Gemisch zu erzeugen, um ein molares Verhältnis von Sauerstoff zu Ammoniak in dem Bereich von 1,3 bis 9 zu erhalten;
d) Oxidieren von Ammoniak in dem Ammoniak/sauerstoffangereicherte-Luft-Gemisch in einem Ammoniakkonverter bei einer Temperatur in dem Bereich von 800 bis 950 °C, um ein gasförmiges NO_{X}-Gas/Dampf-Gemisch, das Wasser und Stickoxid umfasst, zu erzeugen;
e) Umwandeln des in dem Ammoniakkonverter oder aus dem gasförmigen NO_{X}-Gas/Dampf-Gemisch erzeugten Dampfs in Leistung;
f) Abtrennen und Kondensieren von Dampf aus NO_{X}-Gas in dem gasförmigen NO_{X}-Gas/Dampf-Gemisch in einem Wasserkühler/Kondensator, um ein wässriges verdünntes Salpetersäuregemisch und einen gasförmigen NO_{X}-Strom zu erzeugen;
g) Absorbieren des gasförmigen NO_{X}-Stroms in einem Absorptionsturm, um einen Strom aus rohem Salpetersäure-enthaltendem NO_{X}-Restgas und ein Endgas, das NO_{X}-Gase umfasst, zu erzeugen; und
h) Expandieren des Endgases oder des erhitzten Endgases in einem Endgasexpander;
**dadurch gekennzeichnet, dass** das Verfahren ferner die Schritte umfasst:
i) Druckbeaufschlagen eines Teils des bei Schritt g) erhaltenen Endgases auf einen Druck von etwa P1, um ein druckbeaufschlagtes Endgas zu erzeugen;
j)-Mischen des druckbeaufschlagten Endgases mit dem Druckluftstrom;
k) Messen der Temperatur in dem Ammoniakkonverter; und
1) Einstellen des bei Schritt i) druckbeaufschlagten Gasvolumens, wenn die bei Schritt k) gemessene Temperatur außerhalb des Bereichs von 800-950 °C liegt, so dass die Temperatur in dem Ammoniakkonverter in dem Bereich von 800 bis 950 °C gehalten wird.

9. Verfahren nach Anspruch 8, ferner umfassend den Schritt:
m) Erhitzen des bei Schritt g) erhaltenen Endgases auf eine Temperatur in dem Bereich von 200 bis 650 °C in einem stromaufwärts des Wasserkühler/Kondensators angeordneten Endgaserhitzer mit der Wärme des aus dem Ammoniakkonverter kommenden NO_{X}-Gas/Dampf-Gemischs.

10. Verfahren nach Anspruch 8, ferner umfassend den Schritt:
m') Erhitzen des bei Schritt g) erhaltenen Endgases auf eine Temperatur in dem Bereich von 200 bis 650 °C in einem stromaufwärts des Wasserkühler/Kondensators angeordneten Endgaserhitzer mit der Wärme des aus dem Ammoniakkonverter kommenden NO_{X}-Gas/Dampf-Gemischs;
wobei bei Schritt i) ein Teil des bei Schritt g) oder bei Schritt m') erhaltenen Endgases druckbeaufschlagt wird.

11. Verfahren nach einem der Ansprüche 8 bis 10, ferner umfassend den Schritt:
n) Betreiben einer Hochdruck-Elektrolysevorrichtung zum Erzeugen des bei dem Mischschritt b) verwendeten Sauerstoffgases.

12. Verfahren nach einem der Ansprüche 8 bis 11, ferner umfassend den Schritt:
o) Leiten eines sauerstoffreichen Gases mit einem Druck von wenigstens gleich Atmosphärendruck zu dem Einlass des Luftkompressors.

13. Verfahren nach einem der Ansprüche 8 bis 12, ferner umfassend den Schritt:
p) Zuführen einer zusätzlichen Quelle von druckbeaufschlagtem sauerstoffreichem Gas stromabwärts des Absorptionsturms und stromaufwärts des Mittels zum Druckbeaufschlagen.

14. Verfahren nach einem der Ansprüche 8 bis 13, ferner umfassend die Schritte:
q) Zuführen eines sauerstoffreichen Bleichgases zu einem Bleicher zum Bleichen von rohem Salpetersäure-enthaltendem NO_{X}-Restgas;
r) Bleichen des Stroms von rohem Salpetersäure-enthaltendem NO_{X}-Restgas in dem Bleicher, um gebleichte Salpetersäure und Bleichgase zu erzeugen; und
s) Mischen der Bleichgase mit dem gasförmigen NO_{X}-Strom.

15. Verwendung des Systems nach einem der Ansprüche 1 bis 7 zum Durchführen des Verfahrens nach einem der Ansprüche 8 bis 14.

16. Verfahren zum Umbauen eines Systems zur Herstellung von Salpetersäure, wobei das bestehende System umfasst:
• einen Luftkompressor zum Komprimieren von Luft auf einen Druck P1, umfassend einen Einlass und einen Auslass, um einen Druckluftstrom bereitzustellen;
• gegebenenfalls eine Quelle von druckbeaufschlagtem sauerstoffreichem Gas mit einem Druck von höher als der Druck des Druckluftstroms in Fluidverbindung mit dem Druckluftstrom, um ein sauerstoffreiches-Gas/Druckluftstrom-Gemisch bereitzustellen;
• eine Mischvorrichtung zum Mischen des sauerstoffreiches-Gas/Druckluftstrom-Gemischs mit einem Ammoniakgasstrom, um ein Ammoniak/sauerstoffangereicherte-Luft-Gemisch bereitzustellen;
• einen Ammoniakkonverter zum Oxidieren von Ammoniak in dem Ammoniak/sauerstoffangereicherte-Luft-Gemisch, um ein NO_{X}-Gas/Dampf-Gemisch, das Wasser und Stickoxid umfasst, bereitzustellen;
• Mittel zum Messen der Temperatur in dem Ammoniakkonverter;
• Mittel zum Regulieren der Konzentration von Ammoniak und von Sauerstoff in dem Ammoniakkonverter;
• eine Dampfturbine oder einen Elektromotor und Mittel zum Umwandeln von Dampf in Elektrizität, um Dampf in Leistung umzuwandeln, in Fluidverbindung mit dem Ammoniakkonverter oder dem NO_{X}-Gas/Dampf-Gemisch;
• einen Wasserkühler/Kondensator zum Abtrennen und Kondensieren von Dampf aus NO_{X}-Gas in dem gasförmigen NO_{X}-Gas/Dampf-Gemisch, um ein wässriges verdünntes Salpetersäuregemisch und einen gasförmigen NO_{X}-Strom bereitzustellen;
• einen Absorptionsturm stromabwärts des Gaskühler/Kondensators zum Absorbieren von NO_{X}-Gasen in Wasser, um einen Strom von rohem Salpetersäure-enthaltendem NO_{X}-Restgas und ein Endgas, das NO_{X}-Gase umfasst, bereitzustellen, umfassend einen Absorptionsturm-Endgasauslass zum Evakuieren des Endgases; und
• einen Endgasexpander zum Expandieren des Endgases stromabwärts des Absorptionsturms, umfassend einen Endgasexpandereinlass in Fluidverbindung mit dem Absorptionsturm-Endgasauslass und einen Endgasexpanderauslass;
zu einem System nach einem der Ansprüche 1 bis 6, umfassend die Schritte:
• Einführen von Mitteln zum Aufteilen des Endgases in einen ersten Endgasstrom, der zu dem Endgasexpandereinlass geleitet wird, und einen zweiten Endgasstrom, der zu einem Mittel zum Druckbeaufschlagen des Endgasstroms auf einen Druck von etwa P1 in Fluidverbindung mit dem Druckluftstrom geleitet wird, um einen druckbeaufschlagten Endgasstrom bereitzustellen, der mit dem Druckluftstrom zusammenströmt; und Einführen von Mitteln zum Einstellen der Menge an Endgas, das in den ersten Endgasstrom, der zu dem Endgasexpandereinlass geleitet wird, und einen zweiten Endgasstrom, der zu Mitteln zum Druckbeaufschlagen geleitet wird, aufgeteilt wird, und
• gegebenenfalls Einführen einer Quelle von druckbeaufschlagtem sauerstoffreichem Gas, wie z.B. eine Hochdruck-Wasserelektrolysevorrichtung, wobei das druckbeaufschlagte sauerstoffreiche Gas einen Druck aufweist, der höher als der Druck des Druckluftstroms ist, und Fluidverbinden der Quelle von druckbeaufschlagtem sauerstoffreichem Gas mit dem Druckluftstrom, um ein sauerstoffreiches-Gas/Druckluftstrom-Gemisch bereitzustellen.

## Revendications

1. Système de production d'acide nitrique avec une consommation d'énergie réduite, comprenant :
• un compresseur d'air pour comprimer l'air jusqu'à une pression P1, comprenant une entrée et une sortie, pour fournir un flux d'air comprimé ;
• une source de gaz riche en oxygène sous pression ayant une pression supérieure à P1, telle qu'un électrolyseur à eau haute pression, en communication fluidique avec le flux d'air comprimé, pour fournir un mélange de gaz riche en oxygène/flux d'air comprimé ;
• un appareil de mélange pour mélanger le mélange de gaz riche en oxygène/flux d'air comprimé avec un flux de gaz ammoniac, afin de produire un mélange d'ammoniac/air riche en oxygène ;
• un convertisseur d'ammoniac pour oxyder l'ammoniac présent dans le mélange d'ammoniac/air riche en oxygène, afin de produire un mélange de gaz NOₓ/vapeur, comprenant de l'eau et de l'oxyde nitrique ;
• un moyen de mesure de la température dans le convertisseur d'ammoniac ;
• un moyen de régulation de la concentration d'ammoniac et d'oxygène dans le convertisseur d'ammoniac ;
• une turbine à vapeur ou un moteur électrique et un moyen pour convertir la vapeur en électricité, pour convertir la vapeur en énergie, en communication fluidique avec le convertisseur d'ammoniac ou le mélange de gaz NOₓ/vapeur ;
• un refroidisseur/condenseur d'eau pour séparer et condenser la vapeur du gaz NOₓ dans le mélange gazeux de gaz NOₓ/vapeur, pour fournir un mélange aqueux dilué d'acide nitrique et un flux gazeux de NOₓ ;
• une tour d'absorption en aval du refroidisseur/condenseur d'eau, pour absorber les gaz NOₓ provenant du flux gazeux de NOₓ dans de l'eau, afin de produire un flux gazeux de NOₓ résiduel brut contenant de l'acide nitrique et un gaz résiduaire comprenant des gaz NOₓ, comprenant une sortie de gaz résiduaire de tour d'absorption pour évacuer le gaz résiduaire ; et
un détendeur de gaz résiduaire pour détendre le gaz résiduaire en aval de la tour d'absorption comprenant une entrée de détendeur de gaz résiduaire en communication fluidique avec la sortie de gaz résiduaire de la tour d'absorption, et une sortie de détendeur de gaz résiduaire ;
**caractérisé en ce que** le système comprend en outre :
• un moyen pour diviser le gaz résiduaire en un premier flux de gaz résiduaire dirigé vers l'entrée de détendeur de gaz résiduaire et un second flux de gaz résiduaire dirigé vers un moyen de mise sous pression pour mettre sous pression le flux de gaz résiduaire à une pression d'environ P1 en communication fluidique avec le flux d'air comprimé, pour fournir un flux de gaz résiduaire mis sous pression joignant le flux d'air comprimé ; et
• un moyen pour régler la quantité de gaz résiduaire qui est divisée en le flux de gaz résiduaire dirigé vers l'entrée de détendeur de gaz résiduaire et le flux de gaz résiduaire dirigé vers le moyen de mise sous pression.

2. Système selon la revendication 1, dans lequel le système comprend en outre un réchauffeur de gaz résiduaire, ayant une entrée en communication fluidique avec la sortie de gaz résiduaire d'absorption et une sortie en communication fluidique avec l'entrée de détendeur de gaz résiduaire, placé en amont du refroidisseur/condenseur d'eau pour chauffer le gaz résiduaire provenant de la tour d'absorption jusqu'à une température dans la plage entre 200 et 650 °C, la chaleur provenant du mélange de gaz NOₓ/vapeur provenant du convertisseur d'ammoniac, et dans lequel un moyen de division du gaz résiduaire est placé en amont du réchauffeur de gaz résiduaire.

3. Système selon l'une quelconque des revendications 1 à 2, dans lequel le système comprend en outre un réchauffeur de gaz résiduaire, ayant une entrée en communication fluidique avec la sortie de gaz résiduaire d'absorption et une sortie en communication fluidique avec l'entrée de détendeur de gaz résiduaire, placé en amont du refroidisseur/condenseur d'eau pour chauffer le gaz résiduaire provenant de la tour d'absorption à une température dans la plage entre 200 et 650 °C, la chaleur provenant du mélange de gaz NOₓ/vapeur provenant du convertisseur d'ammoniac, et dans lequel un moyen de division du gaz résiduaire est placé en aval du réchauffeur de gaz résiduaire.

4. Système selon l'une quelconque des revendications 1 à 3, dans lequel la source de gaz riche en oxygène sous pression est fournie par un électrolyseur d'eau à haute pression.

5. Système selon l'une quelconque des revendications 1 à 4, comprenant en outre une source de gaz riche en oxygène ayant une pression au moins égale à la pression atmosphérique, en communication fluidique avec l'entrée du compresseur d'air.

6. Système selon l'une quelconque des revendications 1 à 5, comprenant en outre une source supplémentaire de gaz riche en oxygène sous pression en communication fluidique avec une zone en aval de la tour d'absorption et en amont du moyen de mise sous pression.

7. Système selon l'une quelconque des revendications 1 à 6, comprenant en outre un blanchisseur pour blanchir du gaz NOₓ résiduel brut contenant de l'acide nitrique, comprenant une entrée pour un gaz de blanchiment riche en oxygène, une entrée pour le flux de gaz NOₓ résiduel brut contenant de l'acide nitrique, une sortie pour l'acide nitrique blanchi et une sortie pour des gaz de blanchiment, dans lequel la sortie pour les gaz de blanchiment est en communication fluidique avec le flux de gaz NOₓ.

8. Procédé de production d'acide nitrique avec une consommation d'énergie réduite, comprenant les étapes de :
a) compression d'air dans un compresseur d'air, ce qui permet de produire un flux d'air comprimé ayant une pression P1 ;
b) mélange d'un gaz riche en oxygène sous pression ayant une pression supérieure à P1 avec le flux d'air comprimé, ce qui permet d'obtenir un mélange de gaz riche en oxygène/flux d'air comprimé ;
c) mélange du mélange de gaz riche en oxygène/flux d'air comprimé avec un flux de gaz ammoniac dans un appareil de mélange, ce qui permet de produire un mélange d'ammoniac/air riche en oxygène, de manière à obtenir un rapport molaire oxygène sur ammoniac dans la plage de 1,3 à 9 ;
d) oxydation de l'ammoniac dans le mélange d'ammoniac/air riche en oxygène dans un convertisseur d'ammoniac à une température dans la plage de 800 à 950 °C, ce qui permet de produire un mélange gazeux de gaz NOₓ/vapeur, comprenant de l'eau et de l'oxyde nitrique ;
e) conversion de la vapeur générée dans le convertisseur d'ammoniac ou à partir du mélange gazeux de gaz NOₓ/vapeur en énergie ;
f) séparation et condensation de vapeur du gaz NOₓ dans le mélange gazeux de gaz NOₓ/vapeur, ce qui permet de générer un mélange aqueux dilué d'acide nitrique et un flux gazeux de NOₓ, dans un refroidisseur/condenseur d'eau ;
h) absorption du flux gazeux de NOₓ dans une tour d'absorption, ce qui permet de produire un flux de gaz NOₓ résiduel contenant de l'acide nitrique brut et un gaz résiduaire comprenant des gaz NOₓ ; et
h) détente du gaz résiduaire ou du gaz résiduaire chauffé dans un détendeur de gaz résiduaire ;
**caractérisé en ce que** le procédé comprend en outre les étapes de :
i) mise sous pression d'une partie du gaz résiduaire obtenu à l'étape g) à une pression d'environ P1, ce qui permet de générer un gaz résiduaire sous pression ;
j) mélange du gaz résiduaire sous pression avec le flux d'air comprimé ;
k) mesure de la température dans le convertisseur d'ammoniac ; et
l) ajustement du volume de gaz étant mis sous pression à l'étape i) si la température mesurée à l'étape k) est en dehors de la plage de 800 à 950 °C, de telle sorte que la température dans le convertisseur d'ammoniac soit maintenue dans la plage de 800 à 950 °C.

9. Procédé selon la revendication 8, comprenant en outre l'étape de :
m) chauffage du gaz résiduaire obtenu à l'étape g) jusqu'à une température dans la plage de 200 à 650 °C dans un réchauffeur de gaz résiduaire placé en amont du refroidisseur/condenseur d'eau avec la chaleur du mélange de gaz NOₓ/vapeur provenant du convertisseur d'ammoniac.

10. Procédé selon la revendication 8, comprenant en outre l'étape de :
m) chauffage du gaz résiduaire obtenu à l'étape g) jusqu'à une température dans la plage de 200 à 650 °C dans un réchauffeur de gaz résiduaire placé en amont du refroidisseur/condenseur d'eau avec la chaleur du mélange de gaz NOₓ/vapeur provenant du convertisseur d'ammoniac ;
dans lequel, à l'étape i), une partie du gaz résiduaire obtenu à l'étape g) ou à l'étape m') est mise sous pression.

11. Procédé selon l'une quelconque des revendications 8 à 10, comprenant en outre l'étape de :
n) exploitation d'un électrolyseur d'eau à haute pression pour produire le gaz oxygène utilisé dans l'étape de mélange b).

12. Procédé selon l'une quelconque des revendications 8 à 11, comprenant en outre l'étape de :
o) envoi d'un gaz riche en oxygène ayant une pression au moins égale à la pression atmosphérique vers l'entrée du compresseur d'air.

13. Procédé selon l'une quelconque des revendications 8 à 12, comprenant en outre l'étape de :
p) alimentation d'une source supplémentaire de gaz riche en oxygène sous pression en aval de la tour d'absorption et en amont du moyen de mise sous pression.

14. Procédé selon l'une quelconque des revendications 8 à 13, comprenant en outre les étapes de :
q) introduction d'un gaz de blanchiment riche en oxygène dans un blanchisseur pour le blanchiment de gaz NOₓ résiduel brut contenant de l'acide nitrique ;
r) blanchiment du flux gazeux de NOₓ résiduel brut contenant de l'acide nitrique dans le blanchisseur, ce qui permet de générer de l'acide nitrique blanchi et des gaz de blanchiment ; et
s) mélange des gaz de blanchiment avec le flux gazeux de NOₓ.

15. Utilisation du système selon l'une quelconque des revendications 1 à 7 pour la réalisation du procédé selon l'une quelconque des revendications 8 à 14.

16. Procédé de refonte d'un système de production d'acide nitrique, dans lequel le système existant comprend :
• un compresseur d'air pour comprimer l'air jusqu'à une pression P1, comprenant une entrée et une sortie, pour fournir un flux d'air comprimé ;
• éventuellement, une source de gaz riche en oxygène sous pression ayant une pression supérieure à la pression du flux d'air comprimé, en communication fluidique avec le flux d'air comprimé, pour fournir un mélange de gaz riche en oxygène/flux d'air comprimé ;
• un appareil de mélange pour mélanger le mélange de gaz riche en oxygène/flux d'air comprimé avec un flux de gaz ammoniac, afin de produire un mélange d'ammoniac/air riche en oxygène ;
• un convertisseur d'ammoniac pour oxyder l'ammoniac présent dans le mélange d'ammoniac/air riche en oxygène, afin de produire un mélange de gaz NOₓ/vapeur, comprenant de l'eau et de l'oxyde nitrique ;
• un moyen de mesure de la température dans le convertisseur d'ammoniac ;
• un moyen de régulation de la concentration d'ammoniac et d'oxygène dans le convertisseur d'ammoniac ;
• une turbine à vapeur ou un moteur électrique et un moyen pour convertir la vapeur en électricité, pour convertir la vapeur en énergie, en communication fluidique avec le convertisseur d'ammoniac ou le mélange de gaz NOₓ/vapeur ;
• un refroidisseur/condenseur d'eau pour séparer et condenser la vapeur du gaz NOₓ dans le mélange gazeux de gaz NOₓ/vapeur, afin de produire un mélange aqueux dilué d'acide nitrique et un flux gazeux de NOₓ ;
• une tour d'absorption en aval du refroidisseur/condenseur de gaz pour absorber les gaz NOₓ dans de l'eau, pour fournir un flux gazeux de NOₓ résiduel brut contenant de l'acide nitrique et un gaz résiduaire comprenant des gaz NOₓ, comprenant une sortie de gaz résiduaire de tour d'absorption pour évacuer le gaz résiduaire ; et
• un détendeur de gaz résiduaire pour détendre le gaz résiduaire en aval de la tour d'absorption comprenant une entrée de détendeur de gaz résiduaire en communication fluidique avec la sortie de gaz résiduaire de la tour d'absorption, et une sortie de détendeur de gaz résiduaire ;
en un système selon les revendications 1 à 6, comprenant les étapes de :
• introduction d'un moyen pour diviser le gaz résiduaire en un premier flux de gaz résiduaire dirigé vers l'entrée de détendeur de gaz résiduaire et un second flux de gaz résiduaire dirigé vers un moyen de mise sous pression pour mettre sous pression le flux de gaz résiduaire à une pression d'environ P1 en communication fluidique avec le flux d'air comprimé, pour fournir un flux de gaz résiduaire sous pression joignant le flux d'air comprimé ; et un moyen d'introduction pour ajuster la quantité de gaz résiduaire qui est divisée en le premier flux de gaz résiduaire dirigé vers l'entrée de détendeur de gaz résiduaire et un second flux de gaz résiduaire dirigé vers un moyen de mise sous pression, et
• éventuellement, introduction d'une source de gaz riche en oxygène sous pression, telle qu'un électrolyseur haute pression, ledit gaz riche en oxygène sous pression ayant une pression supérieure à la pression du flux d'air comprimé, et connexion de manière fluidique de la source de gaz riche en oxygène sous pression au flux d'air comprimé, pour fournir un mélange de gaz riche en oxygène/flux d'air comprimé.
